(19) Europäisches Patentamt
European Patent Office
Office européen des brevets

(11) EP 2 980 171 B1

(12) **EUROPÄISCHE PATENTSCHRIFT**

(45) Veröffentlichungstag und Bekanntmachung des Hinweises auf die Patenterteilung:
**03.05.2017 Patentblatt 2017/18**

(51) Int Cl.:
***C09D 133/24*** *(2006.01)* ***C08F 220/34*** *(2006.01)*

(21) Anmeldenummer: **14179357.0**

(22) Anmeldetag: **31.07.2014**

(54) **HÄRTBARE ZUSAMMENSETZUNG UND GEHÄRTETES ERZEUGNIS MIT ANTIMIKROBIELLEN EIGENSCHAFTEN**

CURABLE COMPOUND AND CURED PRODUCT WITH ANTIMICROBIAL PROPERTIES

COMPOSITION DURCISSABLE ET PRODUIT DURCI PRÉSENTANT DES PROPRIÉTÉS ANTI-MICROBIENNES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**03.02.2016 Patentblatt 2016/05**

(73) Patentinhaber: **Fachhochschule Münster**
**48565 Steinfurt (DE)**

(72) Erfinder:
- **Lorenz, Reinhard**
  **48565 Steinfurt (DE)**
- **Fischer, Björn**
  **48369 Saerbeck (DE)**
- **Henglmüller, Bettina**
  **49808 Lingen (DE)**
- **Henglmüller, Marvin**
  **49808 Lingen (DE)**
- **Manser, Florian**
  **48565 Steinfurt (DE)**

(74) Vertreter: **Ter Meer Steinmeister & Partner**
**Patentanwälte mbB**
**Nymphenburger Straße 4**
**80335 München (DE)**

(56) Entgegenhaltungen:
**EP-A1- 0 518 122** **WO-A2-01/85813**
**CN-A- 103 694 429** **JP-A- 2002 256 030**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 980 171 B1

## Beschreibung

Die vorliegende Erfindung betrifft härtbare Zusammensetzungen, welche bevorzugt zur Herstellung von Erzeugnissen mit intrinsisch antimikrobieller Wirkung eingesetzt werden können. Weiterhin betrifft die vorliegende Erfindung die Verwendung dieser härtbaren Zusammensetzung in verschiedenen Verarbeitungsverfahren.

Bei zahlreichen Anwendungen von Werkstoffen wie Kunststoffen ist der Aufwuchs von Algen, Pilzen oder Muscheln eine unerfreuliche Begleiterscheinung. Deutlich ernstere Probleme können allerdings durch die Bildung von bakteriellen Biofilmen und die Übertragung pathogener Keime entstehen. Der Bekämpfung und Vermeidung dieser unerwünschten Effekte kommt somit große medizinische, hygienische, lebensmitteltechnologische und praktische Bedeutung zu. Um diesen Problemen zu begegnen werden neben der mechanisch-chemischen Reinigung dem Kunststoff häufig Additive zugegeben, wobei es sich hierbei häufig um klassische Biozide (z.B. Silber-, Kupfer- oder Zinkverbindungen oder organische Verbindungen wie Triclosan, 10,10'-Oxy-bis-phenoxyarsin, N-(Trifluormethylthio)phthalimid, N-(Trichlormethylthio)phthalimid, verschiedene Isothiazolione) handelt.

Es war bislang schwierig, Oberflächen antimikrobiell auszustatten, ohne dass der als Additiv zugegebene antimikrobielle Wirkstoff aus der Oberfläche herausdiffundiert. Es gab einige Versuche, antimikrobiell funktionalisierte Monomere zum Aufbau von antimikrobiellen Polymeren zu nutzen. Diese zeichneten sich jedoch häufig durch unzureichende Werkstoffeigenschaften, beispielsweise eine zu niedrige Glasübergangstemperatur, aus.

EP-A-518122) offenbart härtbare Zusammensetzung auf der Basis von Vinylester und Vinylester urethan Polymeren, die Acrylat Monomere enthalten.WO-A-01/85813 offenbart antimicrobielle Kopolymere aus Acrylesters und Amino-substituierten Acrylestern die aber nicht härtbar sind.JP-A-2002/256030 offenbart antifouling Beschichtungen. H. Menzel gibt in "Schutzschicht gegen Bakterien" (Nachrichten aus der Chemie, 59, November 2011, S. 1039-43) einen Überblick über medizinisch geeignete antimikrobielle Beschichtungen auf der Basis von Polymeren mit hydrophoben Strukturelementen in Kombination mit einer hohen positiven Ladungsdichte. Die verschiedenen Wirkmechanismen gegenüber gramm-positiven und gramm-negativen Bakterien werden kurz erörtert. Die meisten Strukturen beruhen auf quaternären Ammonium- und Phosphoniumionen. Antimikrobielle Polymere für kompakte werkstoffliche Anwendungen werden nicht behandelt.

Folglich besteht im Stand der Technik Bedarf an Erzeugnissen, die einerseits gute Werkstoffeigenschaften aufweisen und andererseits gute antimikrobielle Eigenschaften besitzen.

Eine Aufgabe der vorliegenden Erfindung besteht daher darin, eine in der Praxis leicht einsetzbare Technologie bereitzustellen, mit der antimikrobiell ausgerüstete Erzeugnisse hergestellt werden können, aus denen kein antimikrobielles Additiv herausdiffundieren kann, d.h. die Erzeugnisse sollen intrinsisch antimikrobiell sein. Eine weitere Aufgabe besteht darin, ein antimikrobielles Erzeugnis bereitzustellen, das "in the bulk", d.h. im Gesamtvolumen, antimikrobiell funktionalisiert ist und daher nach Verletzung oder Veränderung seiner Oberfläche, z.B. durch spanende Bearbeitung, Schlag, Abrasion und Polieren oder Schnitt, eine neue Oberfläche bildet, die ebenfalls intrinsisch antimikrobiell ist.

Das antimikrobielle Erzeugnis soll zudem gute Werkstoffeigenschaften aufweisen, beispielsweise eine ausreichend hohe Glastemperatur und Lösungsmittelbeständigkeit.

Die der Erfindung zu Grunde liegende Aufgabe wird durch die vorliegende, härtbare Zusammensetzung gelöst, welche neben einer speziellen Verbindung mit einer radikalisch reaktiven Doppelbindung ein spezielles Methacrylat oder Acrylat enthält.

Gegenstand der Erfindung ist somit eine härtbare Zusammensetzung, enthaltend

(a) eine Verbindung mit einer radikalisch reaktiven Doppelbindung ausgewählt aus einem ungesättigten Polyester, einem Vinylester und Vinylesterurethan, oder Gemischen daraus und

(b) ein Methacrylat und/oder Acrylat ausgewählt aus tert.-Butylaminoethylmethacrylat, Dimethylaminoethylmethacrylat, Diethylaminoethylmethacrylat, tert.-Butylaminoethylacrylat, Dimethylaminoethylacrylat, Diethylaminoethylacrylat und Gemischen daraus.

Das nach der Härtung der erfindungsgemäßen härtbaren Zusammensetzung gebildete gehärtete Erzeugnis wirkt üblicherweise ohne Verwendung zusätzlicher Biozide intrinsisch antimikrobiell. Die neuen Erzeugnisse werden daher als intrinsisch antimikrobiell bezeichnet. Der Vorteil der erfindungsgemäßen härtbaren Zusammensetzung ist, dass hiermit Erzeugnisse hergestellt werden können, aus denen antimikrobielle Wirkstoffe nicht austreten können und dass diese Erzeugnisse auch bei mechanischer Veränderung, spanender Bearbeitung oder Beschädigung ihrer Oberfläche antimikrobiell bleiben.

Ein weiterer Gegenstand der Erfindung ist eine Verwendung der erfindungsgemäßen Zusammensetzung in einem Verarbeitungsverfahren, wie zum Beispiel Beschichten, Lackieren, Gießen, Tauchen, Laminieren, Spaltimprägnieren, Schleudern, Kleben, Harzinjektion, Pressen, Spritzguss, Profilziehen, Spachteln und Wickeln.

Ferner ist Gegenstand der Erfindung ein Verfahren zur Herstellung gehärteter, antimikrobieller Erzeugnisse, wobei die erfindungsgemäße härtbare Zusammensetzung gehärtet wird.

Ebenfalls ist Gegenstand der Erfindung ein Erzeugnis mit antimikrobieller Wirkung erhältlich durch die Härtung der erfindungsgemäßen härtbaren Zusammensetzung.

Die erfindungsgemäße härtbare Zusammensetzung enthält als Komponente (a) eine Verbindung mit einer radikalisch reaktiven Doppelbindung ausgewählt aus einem ungesättigten Polyester, Vinylester und/oder Vinylesterurethan oder Gemischen daraus.

In einer bevorzugten Ausführungsform handelt es sich bei der Verbindung mit einer radikalisch reaktiven Doppelbindung (a) um einen ungesättigten Polyester. Bei dem ungesättigten Polyester kann es sich bevorzugt um bei 23°C feste oder halbfeste Verbindungen handeln. Die ungesättigten Polyester weisen neben Estergruppen mindestens eine radikalisch reaktive ungesättigte Kohlenstoff-Kohlenstoff-Bindung auf, d.h. es liegt mindestens eine Kohlenstoff-Kohlenstoff-Doppelbindung vor.

In einer bevorzugten Ausführungsform ist der ungesättigte Polyester erhältlich durch die Umsetzung einer Dicarbonsäure oder eines Derivates der Dicarbonsäure und einem Diol, wobei es sich bei der Dicarbonsäure um eine Verbindung der Formel (I) handelt

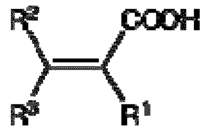

Formel (I)

wobei

| | |
|---|---|
| $R^1$ | unabhängig ausgewählt ist aus H, $CH_3$ und $CH_2COOH$, und |
| $R^2$ und $R^3$ | unabhängig ausgewählt sind aus H, $CH_3$ und COOH. |

Bei den Derivaten der Dicarbonsäure kann es sich bevorzugt um Ester der Dicarbonsäure handeln, wobei sowohl eine oder beide Carbonsäurefunktionen in veresterter Form vorliegen können. Für den Fall, dass beide Carbonsäurefunktionen in veresterter Form vorliegen, können die Ester identisch oder unterschiedlich sein, bevorzugt sind sie identisch. Beispiele für geeignete Ester sind Methylester, Ethylester, Propylester und Butylester, bevorzugt Methyl- oder Ethylester, mehr bevorzugt Methylester.

Alternativ bevorzugt kann es sich bei dem Dicarbonsäurederivat um das Säureanhydrid handeln, welches formal aus einer Abspaltung von Wasser aus der Dicarbonsäure entsteht.

Ebenfalls alternativ bevorzugt kann es sich beim Carbonsäurederivat um das Säurechlorid handeln.

Bevorzugt handelt es sich bei der Dicarbonsäure bzw. des Dicarbonsäurederivates um Fumarsäure, Mesaconsäure, Maleinsäure oder Maleinsäureanhydrid, Citraconsäure oder Citraconsäureanhydrid, Itaconsäure oder Itaconsäureanhydrid oder Gemische davon. Weiterhin kann Maleinsäure mit Dicyclopentadien monofunktionell zum Dicyclopentadienyl-Maleinsäurehalbester umgesetzt werden, der sich in ungesättigte Polyester einbauen lässt. Besonders bevorzugt ist die Itaconsäure und deren Anhydrid, insbesondere die Itaconsäure.

Bei der Itaconsäure handelt es sich um die Verbindung mit der Formel (II)

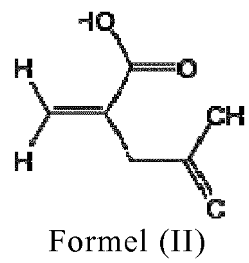

Formel (II)

Die vorstehenden Dicarbonsäuren werden auch als Dicarbonsäuren mit radikalisch reaktiven Doppelbindungen bezeichnet. Die hieraus erhältlichen ungesättigten Polyester haben reaktive Doppelbindungen, welche für eine radikalische Härtung (Vernetzung) mit der unten beschriebenen Komponente (b) geeignet sind.

In einer weiteren bevorzugten Ausführungsform können ebenfalls nicht radikalisch reaktive Dicarbonsäuren bzw. deren Anhydride und Chloride an der Umsetzung mit dem Diol teilnehmen und in den ungesättigten Polyester eingebaut werden, wie aromatische Dicarbonsäuren (beispielsweise Phthalsäure, Isophthalsäure und Terephthalsäure),

aliphatische Dicarbonsäuren (beispielsweise Bernsteinsäure, Adipinsäure und Sebacinsäure) sowie cycloaliphatische Dicarbonsäuren (beispielsweise 1,2-Cyclohexandicarbonsäure, 1,4-Cyclohexandicarbonsäure und 1,2,5,6-Tetrahydrophthalsäure).

Zusätzlich zu der Dicarbonsäure kann zur Herstellung des ungesättigten Polyesters eine Tricarbonsäure und/oder ein Tricarbonsäureanhydrid oder eine Tetracarbonsäure und/oder ein Tetracarbonsäureanhydrid eingesetzt werden, z.B. Trimellithsäure, Trimellithsäureanhydrid, Pyromellithsäure oder Pyromellithsäuredianhydrid.

Das Diol ist vorzugsweise ausgewählt aus der Gruppe 1,2-Ethylenglykol, 1,2-Propandiol, 1,3-Propandiol, Diethylenglykol, Dipropylenglykol, Triethylenglykol, Tripropylenglykol, Neopentylglykol, Butan-1,3-diol, Butan-1,2-diol, Butan-2,3-diol, Butan-1,4-diol, 2-Butyl-2-ethylpropandiol-1,3, 2-Metyl-propan-1,3diol, 2,2,4-Trimethylpentandiol-1,3, 2-Ethyl-2-methylpropan-1,3-diol, 2,2-Diethylpropandiol-1,3, 2-Propyl-2-methylpropandiol-1,3, Pentan-1,5-diol, Hexan-1,6-diol, 2,4-Dimethyl-2-ethylhexan-1,3-diol, Hydroxypivalinsäureneopentylglykolester, Isosorbid, cycloaliphatische Diole, wie Tricyclodecandimethanol, perhydriertes Bisphenol A, 2,2,4,4-Tetramethylcyclobutandiol-1,3, 1,4-Cyclohexandimethanol, ethoxyliertes und propoxyliertes Bisphenol A oder Mischungen derselben. Bevorzugt sind Neopentylglykol, Hydroxypivalinsäureneopentylglykolester, 1,4-Cyclohexandimethanol, Tricyclodecandimethanol und ethoxyliertes Bisphenol A.

In einer bevorzugten Ausführungsform kann das Diol bis zu 10 mol% Triol enthalten. Das Triol ist vorzugsweise ausgewählt aus Glycerin, Trimethylolpropan, Triethanolamin, Triisopropanolamin oder Mischungen derselben. Anstelle des Triols kann auch eine andere trifunktionelle Verbindung eingesetzt werden, z.B. Dimethylolbuttersäure oder Dimethylolpropionsäure.

In einer bevorzugten Ausführungsform ist der ungesättigte Polyester erhältlich durch die Umsetzung einer Mischung enthaltend

47 bis 53 mol% ungesättigter radikalisch reaktiver Dicarbonsäure bzw. Anhydrid davon, besonders bevorzugt ungefähr 50 mol % ungesättigter radikalisch reaktiver Dicarbonsäure bzw. Anhydrid davon

47 bis 53 mol% Diol, besonders bevorzugt ungefähr 50 mol % Diol

bezogen auf die Gesamtmolmenge in dem ungesättigten Polyester.

In einer alternativ bevorzugten Ausführungsform ist der ungesättigte Polyester erhältlich durch die Umsetzung einer Mischung enthaltend

20 bis 60 mol%, bevorzugt 30 bis 55 mol% ungesättigter radikalisch reaktiver Dicarbonsäure bzw. Anhydrid davon

0 bis 30 mol%, alternativ 1 bis 20 mol % nicht radikalisch reaktiver Dicarbonsäure bzw. Anhydrid davon

0 bis 10 mol%, alternativ 0,1 bis 5 mol % Tri- und/oder Tetracarbonsäure bzw. Anhydrid davon

40 bis 60 mol%, bevorzugt 30 bis 55 mol % Diol

0 bis 10 mol%, alternativ 0,1 bis 5 mol% Triol,

bezogen auf die Gesamtmolmenge in dem ungesättigten Polyester.

Der ungesättigte Polyester wird beispielsweise durch Polykondensation, bevorzugt in der Schmelze, aus Dicarbonsäure oder eines Derivats der Dicarbonsäure, welche wenigstens teilweise mit einer radikalisch reaktiven Doppelbindung funktionalisiert sind, sowie Diol hergestellt. Die Polykondensation kann bevorzugt in Gegenwart eines Veresterungskatalysators, wie Butylzinnsäure, durchgeführt werden. Ebenfalls bevorzugt kann ein Polymerisationsinhibitor, wie Hydrochinon oder Hydrochinonmonomethylether, zugesetzt werden. Vorzugsweise wird die Polykondensation bei Temperaturen von 100°C bis 250°C mehr bevorzugt von 120°C bis 230°C, insbesondere von 130 bis 200°C durchgeführt. Die Reaktionsdauer der Polykondensation beträgt 3 bis 60 Stunden, bevorzugt 4 bis 40 Sunden, mehr bevorzugt 4 bis 24 Stunden. Gegen Ende der Kondensation kann vorzugsweise ein Vakuum angelegt werden.

Alternativ bevorzugt kann der ungesättigte Polyester durch Veresterung in Gegenwart ein Schleppmittels und bevorzugt eines Veresterungskatalysators hergestellt werden. Als Schleppmittel eignen sich Lösungsmittel, die bevorzugt einen Siedepunkt von 40-150°C aufweisen und in flüssiger Phase nicht mit Wasser mischbar sind. Beispielhaft seien die Lösungsmittel Methylenchlorid, Chloroform, Toluol und die Xylole genannt. Sie werden nach Herstellung des Polyesters bevorzugt durch Destillation und nachfolgende Vakuumbehandlung abgetrennt.

Alternativ bevorzugt kann der ungesättigte Polyester durch Umesterung hergestellt werden. Dazu werden die benötigten Dicarbonsäuren als Dimethylester oder Diethylester eingesetzt, gegebenenfalls benötigte Tricarbonsäuren als Trimethylester oder Triethylester. In Gegenwart eines Umesterungskatalysators wird der Polyester unter Abtrennung von Methanol oder Ethanol hergestellt. Gegen Ende der Reaktion erfolgt bevorzugt eine Vakuumbehandlung. Als Umesterungskatalysatoren eignen sich bespielweise Zink(II)acetat, Calciumacetat, Mangan(II)acetat, fein verteiltes Antimon(III)oxid, fein verteiltes Titandioxid und feinverteiltes Germaniumdioxid.

Alternativ bevorzugt kann der ungesättigte Polyester in Form einer Schotten-Baumann-Reaktion hergestellt werden. Dazu werden die benötigten Dicarbonsäuren in die Dicarbonsäuredichloride überführt, gegebenenfalls die Tricarbonsäuren in die Tricarbonsäuretrichloride. Als geeignete Reagenzien hierfür seinen bespielhaft Thionylchlorid, Phosphortrichlorid, Phosphoroxytrichlorid und Phosphorpentachlorid genannt. Die so hergestellten Säurechloride werden bei - 30°C bis +30°C in Gegenwart einer Base und einem Lösungsmittel mit dem Diol zur Reaktion gebracht. Beispielhaft seien als Basen Kalkmilch, Natriumhydroxid, Kaliumhydroxid, Triethylamin und Pyridin genannt. Natriumhydroxid und Kaliumhydroxid werden bevorzugt als wässrige Lösung eingesetzt. Lösungsmittel für Säurechlorid, Diol und Polyester sind beispielsweise Chlorbenzol, Methylenchlorid und Chloroform. Die Reaktion wird bevorzugt über 2 bis 20 Stunden unter bevorzugt intensivem Rühren geführt. Danach werden gegebenenfalls Feststoffe abfiltriert und die wässrige Phase abgetrennt. Bevorzugt wird die organische Phase mit Wasser gewaschen. Anschließend wird das Lösungsmittel abdestilliert, wobei bevorzugt gegen Ende der Destillation mit Vakuumunterstützung gearbeitet wird.

Den Grad der Polykondensation kann man einerseits aus der erhaltenen Menge an Kondensationswasser in Bezug zu der theoretisch berechneten Menge an Kondensationswasser bestimmen. Eine genaue Methode den Grad der Polykondensation zu beschreiben, ist die Bestimmung der Säurezahl. Sie gibt an, wie viele Carboxylgruppen noch vorhanden sind bzw. wie viel der eingesetzten Dicarbonsäure abreagiert ist.

In einer bevorzugten Ausführungsform weist der ungesättigte Polyester (a) eine Säurezahl von 4-70, mehr bevorzugt von 6 bis 60, insbesondere von 10 bis 50, auf.

Zur Bestimmung der Säurezahl werden ca. 2 g des jeweiligen ungesättigten Polyesters eingewogen und in 40 ml Aceton mit Hilfe eines Magnetrührers auf einer Heizplatte gelöst. Nach dem Abkühlen der Lösung auf 23°C werden 3-4 Tropfen des Indikators Phenolphtalein zugesetzt und mit 0,5 molarer methanolischer KOH bis zum Umschlagspunkt titriert. Mit Hilfe des verbrauchten Volumens an KOH-Lösung, der Polyestereinwaage, der KOH-Konzentration und dem Titer der KOH-Lösung wird die Säurezahl berechnet, wobei 1 mol der KOH (Molgewicht:56,11g) 1 mol Carboxylgruppen entsprechen.

$$\frac{0{,}5 * M(KOH) * Titer * V[ml]}{Einwaage(UP)} = Säurezahl \left[\frac{mg\ KOH}{g\ UP}\right]$$

UP entspricht dem ungesättigten Polyester.

In einer bevorzugten Ausführungsform beträgt die Schmelzviskosität des ungesättigten Polyesters 10 bis 5000 mPas, bevorzugt 20 bis 4000 mPas, insbesondere 40 bis 3250 mPas.

Die Schmelzviskosität der ungesättigten Polyester wird mit einem Kegel-Platte Viskosimeter der Fa. Epprecht Instruments + Controls AG (Standardkegel C mit Durchmesser 19,5 mm und Kegelwinkel von 0,5°) durchgeführt. Hierzu wird vor der Messung die Platte auf 150°C vortemperiert. Anschließend wird der Polyester mit Hilfe eines Holzspatels auf die Platte aufgebracht und die Viskosität bei einer bestimmten Schergeschwindigkeit bei 150 °C gemessen.

Die Skala des eingesetzten Kegel-Platte-Viskosimeters ist in 10 Teile unterteilt. Ein Skalenteil entspricht 100 mPas bei der entsprechenden Schergeschwindigkeit.

Nach der Polykondensation von einerseits Dicarbonsäure und/oder Derivat der Dicarbonsäure und andererseits Diol kann der ungesättigte Polyester als eine Mischung von Polymer, Oligomer und restlichem Monomer entsprechend der jeweiligen Molmassenverteilung vorliegen.

In einer bevorzugten Ausführungsform beträgt die massenmittlere Molmasse ($M_w$) des ungesättigten Polyesters 2000 bis 250000 g/mol, bevorzugt 3000 bis 150000 g/mol, insbesondere 3500 bis 80000 g/mol.

Die massenmittlere Molmasse ($M_w$) wird mittels Gelpermeationschromatographie bestimmt. Hierzu werden ca. 0,1g des Polyesters eingewogen und in 10 ml Tetrahydrofuran gelöst. Anschließend werden 1,5 ml durch einen Spritzenvorsatzfilter filtriert und in die GPC (Fa. Viscotek GPC max VE2001, 2 PSS SD LIN M 5 μm 8*300mm Säulen in Reihe, Kalibrierung mit Polystyrolstandard (ReadyCal-Kit Poly(styrene), PSS-pskitr1 der Fa. PSS) gegeben und vermessen. Als Eluent wird ebenfalls Tetrahydrofuran verwendet (Volumenstrom 1 ml pro Minute). Die Säulentemperatur beträgt 35°C. Als Detektor kommt ein Brechungsindexdetektor zum Einsatz.

Das molare Verhältnis zwischen einerseits Dicarbonsäure und/oder Derivat der Dicarbonsäure und andererseits Diol liegt vorzugsweise in einem Bereich von 0,9:1 bis 1:0,9, besonders bevorzugt von 1,03:1 bis 0,97:1, um ungesättigte Polyester mit hinreichender Molmasse herzustellen. Auftretende Nebenreaktionen, die zur Bildung flüchtiger Nebenprodukte führen, können darüber hinaus die erforderliche Stöchiometrie stark beeinflussen. Zum Beispiel bei Verwendung von Butandiol-1,4 ist dies die Bildung von Tetrahydrofuran; bei Verwendung von 1,2-Propylenglykol ist es die Bildung von 2-Ethyl-4-methyl-1,3-dioxolan. Beide Nebenreaktionen können bewirken, dass ein deutlicher Überschuss bei der Kondensation erforderlich wird. Im Fall von 1,2-Propylenglykol sind dies vorzugsweise 7-15 mol-%, im Fall von 1,4-Butandiol vorzugsweise etwa 30 mol-%.

In einer bevorzugten Ausführungsform kann der ungesättigte Polyester auch aminofunktionalisiert sein. Die Aminogruppen können bevorzugt tertiäre Aminogruppen sein.

Die antimikrobiell wirksamen Aminogruppen können bevorzugt in Form von diethoxylierten oder dipropoxylierten Monoalkylaminen eingebracht werden, die im ungesättigten Polyester als Diolkomponente eingesetzt werden können. Beispiele sind die Diole Methyldiethanolamin, tert.-Butyldiethanolamin, Methyldiisopropanolamin, tert.-Butyldiisopropanolamin oder N-Hydroxyethylpiperazin, Bishydroxyethylpiperazin, N-Hydroxypropylpiperazin, Bishydroxypropylpiperazin oder 3-(Diethylamino)-1,2-propandiol.

Nach Abmischen des ungesättigten Polyesters (a) mit der unten beschriebenen Komponente (b) kann man die härtbare Zusammensetzung erhalten, die als ungesättigtes Polyesterharz (UP-Harz) bezeichnet wird. Bevorzugt kann die härtbare Zusammensetzung bei 25°C in flüssiger Form vorliegen. Durch eine radikalische Härtung erfolgt üblicherweise eine kovalente Verbindung der Komponente (a) und (b). Nach der Härtung des UP-Harzes wird üblicherweise vom UP-Duromer oder UP-Netzwerk gesprochen.

In einer alternativ bevorzugten Ausführungsform handelt es sich bei der Verbindung mit einer radikalisch reaktiven Doppelbindung (a) um einen Vinylester. Vinylester weisen mindestens eine reaktive Doppelbindung auf, d.h. es liegt mindestens eine radikalisch reaktive Kohlenstoff-Kohlenstoff-Doppelbindung vor.

Die Vinylester sind vorzugsweise erhältlich durch die Umsetzung von Bisphenol A-, Bisphenol F- und Novolak-basierten Glycidylethern mit Methacrylsäure, wobei sich der Methacrylsäureester bildet. Auch können Glycidylether anderer Bisphenole (z.B. Bisphenol TMC) eingesetzt werden. Der Glycidylether im Sinne der Erfindung kann auch eine Mischung verschiedener Glycidylether sein.

Vorzugsweise handelt es sich bei dem Vinylester in Komponente a) um einen Vinylester aus einerseits di-, tri- und/oder höherfunktionellem Glycidylether eines di-, tri- und/oder höherwertigen Phenols und andererseits Methacrylsäure im molaren Verhältnis 1,25:1 bis 0,75:1.

Nach Abmischen des Vinylesters (a) mit der unten beschriebenen Komponente (b) kann man die härtbare Zusammensetzung erhalten, die in diesem Fall als das VE-Harz bezeichnet werden kann. Die auf Bisphenol A basierenden Harze können als VE/BA Harze bezeichnet werden. Die auf Novolak basierenden Harze können als VE/NO Harze bezeichnet werden (AVK-TV-Handbuch, "Faserverstärkte Kunststoffe und duroplastische Formassen", 2. Auflage 2005, Seite 40). Bevorzugt kann die härtbare Zusammensetzung bei 25°C in flüssiger Form vorliegen. Durch eine radikalische Härtung erfolgt üblicherweise eine kovalente Verbindung der Komponente (a) und (b). Nach der Härtung des VE-Harzes wird üblicherweise vom VE-Duromer oder VE-Netzwerk gesprochen.

In einer alternativ bevorzugten Ausführungsform handelt es sich bei der Verbindung mit einer radikalisch reaktiven Doppelbindung (a) um Vinylesterurethan. Die Vinylesterurethane weisen mindestens eine reaktive Doppelbindung auf, d.h. es liegt mindestens eine radikalisch reaktive Kohlenstoff-Kohlenstoff-Doppelbindung vor.

In einer bevorzugten Ausführungsform ist das Vinylesterurethan erhältlich durch die Umsetzung eines Hydroxyalkylacrylats und/oder Hydroxyalkylmethacrylats, wie Hydroxypropylmethacrylat und/oder Hydroxyethylmethacrylat, mit Diisocyanaten und/oder Triisocyanaten und/oder Polyisocyanaten. Alternativ kommen Umsetzungsprodukte aus Diolen und/oder Triolen und/oder Tetrolen unterschiedlicher Kettenlänge, Hydroxypropylmethacrylat und/oder Hydroxyethylmethacrylat sowie Diisocyanaten oder Triisocyanaten zum Einsatz. Durch die Auswahl der Diole, Triole, Tetrole und Isocyanate können beispielsweise die Netzwerkeigenschaften beeinflusst und damit auf die Erfordernisse verschiedenster Anwendungen eingestellt werden.

Als Diisocyanate dienen vorzugsweise Monomer-MDI, Polymer-MDI (MDI: Methylendiphenyldiisocyanat), 2,4-TDI, 2,6-TDI (TDI: Toluylendiisocyanat), IPDI, Oligomerisierungsprodukte des IPDI (IPDI: Isophorondiisocyanat), HDI, Oligomerisierungsprodukte des HDI (HDI: Hexamethylendiisocyanat), wobei es sich bei den Oligomerisierungsprodukten des IPDI und des HDI beispielsweise um die entsprechenden Isocyanurate und Biurete handelt, die in verschiedenen Viskositäten und Funktionalitäten kommerziell verfügbar sind. Zudem sind auch weitere Di- und Triisocyanate, die nicht zur Gruppe MDI, TDI, IPDI oder HDI gehören, erfindungsgemäß geeignet.

In einer bevorzugten Ausführungsform können Kettenverlängerer eingesetzt werden. Diese Kettenverlängerer können bevorzugt Verbindungen sein, die mindestens zwei Hydroxygruppen aufweisen. Beispiele für Kettenverlängerer sind Propylenglykol, Dipropylenglykol, Tripropylenglykol, oligomere Propylenglykole, polymere Propylenglykole, Ethylenglykol, Diethylenglykol, Triethylenglykol, oligomere Polyethylenoxide, polymere Polyethylenoxide, Neopentylglykol, Hydroxypivalinsäureneopentylglykolester, 2-Ethyl-2-methyl-propandiol-1,3, 1,4-Butandiol, 1,3-Butandiol, 1,2-Butandiol, 2,3-Butandiol, 2-Butyl-2-ethylpropandiol-1,3, 2-Metyl-propan-1,3-diol, 2,2,4-Trimethylpentandiol-1,3 2-Ethyl-2-methylpropan-1,3-diol, 2,2-Diethylpropandiol-1,3, 2-Propyl-2-methyl-propandiol-1,3, 1,5-Petandiol, 1,6-Hexandiol, Cyclohexandimethanol, Tricyclodecandimethanol, Isosorbid, 2,2,4,4-Tetrametylcyclobutandiol-1,3 oder beliebige Mischungen dieser Stoffe.

Vorzugsweise kann das Vinylesterurethan (a) auch Aminogruppen enthalten. Besonders bevorzugt können die Aminogruppen durch Verwendung von Aminogruppen-haltigen Kettenverlängerern eingeführt werden. Aminogruppen-haltige Kettenverlängerer können beispielsweise Diole und Triole sowie Aminoalkohole mit einer NH-Struktur und einem zusätzlichen tertiären Amin sein. Beispiele für diese Kettenverlängerer sind Bishydroxyethylanilin, Bishydroxypropylanilin, N-Methyldiethanolamin, N-tert.-Butyldiethanolamin, N-Methyldiisopropanolamin, N-tert.-Butyldiisopropanolamin, 3-(Diethylamino)-1,2-propandiol, N-Hydroxyethylpiperazin, N,N'-Bishydroxyethylpiperazin, N-Hydroxy-propylpiperazin, N,N'-Bis-hydroxypropylpiperazin, N,N-Dimethyl-N',N'-bishydroxyethyl-1,3-diaminopropan, N,N-Dimethyl-N',N'-bishydroxyethyldiaminoethan, Triethanolamin, Triisopropanolamin und Mischungen davon.

Alternativ bevorzugt sind aminogruppenhaltige Polyesterole als Kettenverlängerer, die zum Beispiel durch folgende Reaktion zugänglich sind: Maleinsäureanhydrid, Maleinsäure oder Fumarsäure werden mit einem stöchiometrischen Überschuss eines Diols, z.B. Ethylenglykol, Diethylenglykol, Propylenglykol, Dipropylenglykol oder Neopentylglykol zu einem Polyester mit einer Säurezahl < 1 mg KOH/g durch Schmelzkondensation umgesetzt. Die Doppelbindungen werden in einer nachfolgenden Michaeladdition quantitativ oder weitgehend quantitativ mit einem Dialkylamin, z.B. Dimethylamin, Diethylamin, Diisopropylamin, umgesetzt. Für diese Reaktion wird das Dialkylamin stöchiometrisch im Überschuss eingesetzt; nach Beendigung der Reaktion wird der Überschuss an Dialkylamin im Vakuum abgezogen. Das entstandene aminogruppenhaltige Polyesterol ist mit Hydroxylgruppen terminiert und kann nach Bestimmung der OH-Zahl als Kettenverlängerer eingesetzt werden.

In einer bevorzugten Ausführungsform kann zur Herstellung der Vinylesterurethane vorzugsweise ein Lösungsmittel, mehr bevorzugt ein aprotisches Lösungsmittel, verwendet werden. Geeignet sind beispielsweise Aceton oder Methylethylketon. Vorzugsweise wird eine flüssige homogene Mischung aus Hydroxypropylmethacrylat und/oder Hydroxyethylmethacrylat, dem oder den Kettenverlängerer(n), einem Urethanisierungskatalysator und dem Lösungsmittel hergestellt. Hierzu wird das flüssige Isocyanat gegebenen, wobei bevorzugt eine Temperatur von etwa 70°C nicht überschritten wird. Anschließend kann vor weiteren Reaktionen das aprotische Lösungsmittel entfernt werden. Bevorzugt kann das im aprotischen Lösungsmittel vorliegende Vinylesterurethan auch ohne das Entfernen mit der unten beschriebenen Komponente (b) versetzt werden. Die Entfernung des aprotischen Lösungsmittels erfolgt üblicherweise anschließend.

In einer alternativ bevorzugten Ausführungsform kann zur Herstellung der Vinylesterurethane bzw. der entsprechenden härtbaren Zusammensetzung tertiär aminofunktionalisierte Komponente (b) ohne Lösungsmittel verwendet werden. Geeignet sind beispielsweise Dimethylaminoethylmethacrylat, Diethylaminoethylmethacrylat, Dimethylaminoethylacrylat, Diethylaminoethylacrylat und Gemische daraus. Vorzugsweise wird eine flüssige homogene Mischung aus Hydroxypropylmethacrylat und/oder Hydroxyethylmethacrylat, dem oder den Kettenverlängerer(n), vorzugsweise einem Urethanisierungskatalysator und der tertiär aminofunktionalisierten Komponente (b) hergestellt. Hierzu wird das flüssige Isocyanat gegebenen, wobei bevorzugt eine Temperatur von etwa 70°C nicht überschritten wird. Nach Beendigung der Umsetzung liegt eine härtbare Zusammensetzung aus dem gebildeten Vinylesterurethan und der entsprechenden tertiär aminofunktionalisierten Komponente (b) vor.

In einer bevorzugten Ausführungsform kann die härtbare Zusammensetzung Vinylesterurethan (a) und die unten beschriebene Komponente (b) erhalten, wobei die härtbare Zusammensetzung in diesem Fall als VEU-Harz bezeichnet werden kann. Bevorzugt kann die härtbare Zusammensetzung bei 25°C in flüssiger Form vorliegen. Durch eine radikalische Härtung erfolgt üblicherweise eine kovalente Verbindung der Komponente (a) und (b). Nach der Härtung des VEU-Harzes wird üblicherweise vom VEU-Duromer oder VEU-Netzwerk gesprochen.

Vinylester und Vinylesterurethane haben wesentliche strukturelle Gemeinsamkeiten: Sie tragen die radikalisch reaktiven Doppelbindungen beispielsweise in Form einer Methacrylat-Funktion jeweils am Kettenende der Verbindung. Dabei kann es sich bevorzugt um lineare Epoxide und Urethane handeln mit jeweils zwei Kettenenden, um trifunktionelle mit jeweils drei Kettenenden, um tetrafunktionelle mit vier Kettenenden, und so fort. Auch Mischungen können eingesetzt werden.

Hierdurch können bevorzugt folgende Vorteile erreicht werden: Nach der Vernetzung zeigen VE-Duromere und VEU-Duromere relativ wenig freie Kettenenden im Netzwerk. Dies erhöht die chemische Beständigkeit und die Zähigkeit des Netzwerks. Auch weisen die Vinylester und Vinylesterurethane einen engen und scharfen Glasübergang auf, sodass in der Harz-erzeugenden und in der Harzverarbeitenden Industrie beide Stoffklassen als Einheit gesehen werden können.

In der erfindungsgemäßen härtbaren Zusammensetzung ist die Komponente (b) ein Methacrylat oder Acrylat ausgewählt aus tert.-Butylaminoethylmethacrylat, Dimethylaminoethylmethacrylat, Diethylaminoethylmethacrylat, tert.-Butylaminoethylacrylat, Dimethylaminoethylacrylat, Diethylaminoethylacrylat und Gemischen daraus. Bevorzugt ist Komponente (b) ein Methacrylat ausgewählt aus tert.-Butylaminoethylmethacrylat, Dimethylaminoethylmethacrylat, Diethylaminoethylmethacrylat, und Gemischen daraus, mehr bevorzugt tert.-Butylaminoethylmethacrylat.

Die Komponente (b) enthält bevorzugt ein sekundäres oder tertiäres Amin, insbesondere ein sekundäres Amin, und ist somit aminofunktionalisiert. Da die Komponente (b) in der Regel in einem breiten Zusammensetzungsbereich mit der Komponente (a) reagiert, kann man über den Gehalt an aminofunktionalisierter Komponente (b) vorteilhaft den Gehalt an sekundären oder tertiären Aminofunktionen im entstehenden gehärteten Erzeugnis steuern. Auf diese Weise kann die Stärke der antimikrobiellen Eigenschaften des Erzeugnisses eingestellt werden.

In einer bevorzugten Ausführungsform kann die erfindungsgemäße härtbare Zusammensetzung noch neben Verbindung (a) und Komponente (b) einen Reaktivverdünner (c) enthalten. Als Reaktivverdünner (c) wird im Sinne der Erfindung sowohl ein einzelnes geeignetes Monomer als auch eine geeignete Monomerenmischung bezeichnet. Bevorzugt ist, dass das Monomer oder die Monomerenmischung eine radikalische Vernetzung erlauben und vollständig oder weitgehend vollständig ins Netzwerk eingebaut werden können. Dieser Reaktivverdünner kann beispielsweise Styrol, alpha-Methylstyrol, Vinyltoluol, tert.-Butylstyrol, 4-Vinylpyridin, 3-Vinylpyridin, 2-Vinylpyridin, Methylmethacrylat, Divinylbenzol, 1,2,4-Trivinylcyclohexan, Diallylphthalat, Diallylisophthalat, Trisallylisocyanurat sein.

In einer bevorzugten Ausführungsform kann die härtbare Zusammensetzung die Komponenten (a und b) und

Komponente (c) in einem Verhältnis von 20 : 80 bis 100 : 0 enthalten. Das Verhältnis wird bevorzugt so gewählt, dass die resultierende gehärtete Zusammensetzung einen antimikrobiellen Effekt aufweist. Insbesondere handelt es sich bei dem antimikrobiellen Effekt der gehärteten Zusammensetzung um einen sogenannten intrinsisch antimikrobiellen Effekt. Das heißt, die antimikrobiell wirkenden Gruppen sind kovalent an das Polymer gebunden und nicht oder zumindest nicht ausschließlich durch Zugabe von Additiven in das Polymer eingebracht.

In einer bevorzugten Ausführungsform ist Komponente (c) in der härtbaren Zusammensetzung nicht enthalten.

Die erfindungsgemäßen härtbaren Zusammensetzungen können "per se" in den nachstehend beschriebenen Verfahren oder Verwendungen eingesetzt werden. Alternativ können auch Mischungen der erfindungsgemäßen härtbaren Zusammensetzung mit konventionellen, nicht antimikrobiell ausgerüsteten härtbaren Zusammensetzungen für UP-Harze, VE-Harze, VEU-Harze und Methacrylatharze eingesetzt werden, bevorzugt solange der antimikrobielle Effekt erhalten bleibt.

In der erfindungsgemäßen härtbaren Zusammensetzung ist das Verhältnis von Verbindung (a) mit reaktiver Doppelbindung zu (b) Methacrylat oder Acrylat ist üblicherweise nicht beschränkt. In einer bevorzugten Ausführungsform sind je Doppelbindung in Verbindung (a) 0,5 bis 8, bevorzugt 0,7 bis 7, mehr bevorzugt 1 bis 6, noch mehr bevorzugt 1,5 bis 4, insbesondere 1,75 bis 3,5 Methacrylat- oder Acrylatmoleküle (Komponente (b)) in der Zusammensetzung vorhanden. Liegt die Zahl darunter, so kann gegebenenfalls die Zusammensetzung zu hochviskos werden oder es kann zu ungenügender Vernetzung kommen. Liegt die Zahl darüber, so kann es sein, dass die Zusammensetzung gegebenenfalls zu niederviskos wird oder dass Methacrylat- oder Acrylatmoleküle nicht vollständig bei der Vernetzungsreaktion reagieren und freies Restmonomer aus dem Erzeugnis oder der Oberfläche herausdiffundieren kann. Um dies zu verhindern, sollte der Restmonomerengehalt vorzugsweise durch eine längere Nachhärtung bei erhöhter Temperatur abgesenkt werden.

In der vorliegenden Zusammensetzung sind bevorzugt je Doppelbindung in Verbindung (a) 0,5 bis 8 Methacrylat- oder Acrylatmoleküle (Komponente (b)) vorhanden. Anders gesagt ist das Verhältnis von Methacrylat- oder Acrylatmolekülen (Komponente (b)) zu Doppelbindung aus Verbindung (a) bevorzugt 0,5:1 bis 8:1. Die Anzahl der Methacrylat- oder Acrylatmoleküle (Komponente (b)) bzw. die Anzahl der Doppelbindungen in Verbindung (a) ist proportional zu den entsprechenden Molmengen, so dass sich das genannte Verhältnis auch mit deren Hilfe berechnen lässt.

Das Stoffmengenverhältnis von Komponente b) zu den radikalisch reaktiven Doppelbindungen der Komponente a) lässt sich wie folgt berechnen:

Bei einem ungesättigten Polyester vom Typ $ITS_1NPG_{0,5}CHDM_{0,5}$ hat die konstitutive Repetiereinheit eine Molmasse

$$M_R = M_{ITS}+0,5*M_{NPG}+0,5M_{CHDM}-2*M_{H2O}$$

Daraus folgt

$$M_R =130,1 \text{ g/mol} + 0,5*104,2 \text{ g/mol} + 0,5*144,2 \text{ g/mol} - 2*18 \text{ g/mol} = 218,3 \text{ g/mol}$$

Setzt man auf 1 mol radikalisch reaktive Doppelbindung (entsprechend 218,3 g) eine Stoffmenge von 2,5 mol TBAEMA ($M_{TBAEMA}$=185,3 g/mol) ein, so bedeutet dies, dass 218,3 g ungesättigter Polyester mit der Masse TBAEMA ($m_{TBAEMA}$) von

$$m_{TBAEMA} = M_{TBAEMA}*n_{TBAEMA}$$
$$=185,3 \text{ g/mol}*2,5\text{mol}$$
$$=463,3 \text{ g}$$

gemischt werden.
Der TBAEMA-Gehalt dieser Mischung beträgt

$$463,3 \text{ g} / (463,3 \text{ g} +218,3 \text{ g}) = 0,6797$$

entsprechend etwa 68 Gew.%.

Bei einem Vinylesterurethan vom Typ $HPMA_1MDI_{1,01}DPG_{0,5}$, das sich aus 1 mol HPMA ($M_{HPMA}$=144,2 g/mol), 1 mol MDI ($M_{MDI}$=250,3 g/mol) und 0,5 mol DPG ($M_{DPG}$=134,2 g/mol) zusammensetzt, ergeben sich

$$144.2\ g + 250{,}3\ g + 0{,}5*134{,}2\ g = 461{,}6\ g$$

Produkt, das 1 mol radikalisch reaktive Doppelbindungen enthält. Fügt man 2,5 mol TBAEMA (entsprechend 463,3 g) hinzu, so beträgt der Massenanteil TBAEMA in der härtbaren Zusammensetzung 0,5, entsprechend 50 Gew.%.

Der Überschuss von 1 Mol% MDI wird bei der Berechnung vernachlässigt. Er wird aus experimentellen Gründen gewählt, um MDI-Verluste im Tropftrichter sowie Isocyanatverluste durch den Restwassergehalt im HPMA und im Kettenverlängerer zu kompensieren.

Die härtbare Zusammensetzung kann vorzugsweise 20 Gew.-% bis 100 Gew.-%, einer Mischung der Verbindung (a) und Komponente (b) enthalten. In einer bevorzugten Ausführungsform enthält die härtbare Zusammensetzung von 20 Gew.-% bis 50 Gew.-%. einer Mischung der Verbindung (a) und Komponente (b). In einer alternativ bevorzugten Ausführungsform enthält die härtbare Zusammensetzung von 50 Gew.-% bis 80 Gew.-%. einer Mischung der Verbindung (a) und Komponente (b). In einer alternativ bevorzugten Ausführungsform enthält die härtbare Zusammensetzung von 80 Gew.-% bis 100 Gew.-%. einer Mischung der Verbindung (a) und Komponente (b).

Weiterhin kann die erfindungsgemäße Zusammensetzung neben dem bereits erwähnten Reaktivverdünner (c) beispielsweise andere Monomere, Oligomere, Polymere, Lichtschutzmittel, Initiatoren, Additive, Pigmente, Trennmittel, Rheologieadditive, Fasern und/oder Füllstoffe enthalten.

In einer bevorzugten Ausführungsform kann die härtbare Zusammensetzung einen Radikalinitiator enthalten. Vorzugsweise ist der Radikalinitiator ein Photoinitiator oder thermischer Initiator.

Bevorzugt sind Photoiniatoren, die ein C-Radikal bilden können. Photoiniatoren können vorzugsweise Derivate des Benzoins, des Benzils oder ein $\alpha$-Hydroxyketon oder ein $\alpha$-Aminoketon oder ein Acylphosphinoxid oder ein Bisacylphosphinoxid sein.

Der thermische Radikalinitiator ist vorzugsweise kein peroxidischer Radikalinitiator.

Alternativ bevorzugt sind thermische Initiatoren vom Typ der Azoinitiatoren, z.B. 2,2'-Azobis(2-methylpropionitril), auch als AIBN bezeichnet, 1,1'-Azobis(cyclohexan-1-carbonitril) oder Dimethyl-2,2'-azobis(2-methyl-propionat) und sogenannte C-C-labile Verbindungen, z.B. 2,3-Dimethyl-2,3-diphenylbutan, 3,4-Dimethyl-3,4-diphenylhexan oder Mischungen verschiedener Initiatoren.

Die erfindungsgemäße härtbare Zusammensetzung kann vorzugsweise 0,01 bis 4,0 Gew.-%, mehr bevorzugt 0,1 bis 3,5 Gew.-%, insbesondere 0,5 bis 3,0 Gew.-% an Radikalinitiatoren enthalten, bezogen auf das Gesamtgewicht der Zusammensetzung.

In einer alternativen Ausführungsform ist auch eine Härtung der erfindungsgemäßen härtbaren Zusammensetzung auch ohne Initiator möglich. Die Härtung kann alternativ bevorzugt beispielsweise thermisch oder mit energiereicher Strahlung ($\alpha$-,$\beta$- oder $\gamma$-Strahlung) durchgeführt werden.

In einer bevorzugten Ausführungsform kann die erfindungsgemäße härtbare Zusammensetzung Füllstoffe enthalten. Füllstoffe sind feste organische oder anorganischen Substanzen sowie Mischungen davon, die das Volumen der härtbaren Zusammensetzung und des daraus erhältlichen Erzeugnisses vergrößern. Füllstoffe sind üblicherweise inaktive Subtanzen und verändern die Eigenschaften der härtbaren Zusammensetzung sowie des daraus erhältlichen Erzeugnisses nicht. Beispiele für Füllstoffe sind Kork, Holzmehl, Gesteinsmehl, Aluminiumoxid, Magnesiumoxid, Calciumcarbonat, Kohlenstoff (Ruß), Natriumsulfat, Silikate wie Talk, Glimmer, Kaolin, mineralische Kreide sowie gemahlene Kunststoffe und Mischungen daraus.

Die Füllstoffe können in Mengen von 0 bis 60 Gew.-%, bevorzugt von 2 bis 50 Gew.-%, mehr bevorzugt 5 bis 45 Gew.-%, insbesondere 10 bis 40 Gew.-% enthalten sein, bezogen auf das Gesamtgewicht der erfindungsgemäßen härtbaren Zusammensetzung.

Weiterhin kann die erfindungsgemäße härtbare Zusammensetzung vorzugsweise Fasern enthalten. Diese Fasern können bevorzugt als Verstärkungsstoffe betrachtet werden. Geeignete Fasern sind beispielsweise Glasfasern, Kohlenstofffasern, Aramidfasern, Basaltfasern, Naturfasern oder textile Vliese.

Die Fasern können in Mengen von 0 bis 60 Gew.-%, bevorzugt von 1 bis 55 Gew.-%, mehr bevorzugt 5 bis 50 Gew.-%, insbesondere 10 bis 45 Gew.-% enthalten sein, bezogen auf das Gesamtgewicht der erfindungsgemäßen härtbaren Zusammensetzung.

Weitere Zusatzstoffe (d), wie beispielsweise Lichtschutzmittel, schrumpfmindernde thermoplastische Polymere, Eindickmittel, Trennmittel, Hautbildner und Wachse können je nach Verarbeitungsverfahren und Anwendung eingesetzt werden.

In einer bevorzugten Ausführungsform enthält die erfindungsgemäße härtbare Zusammensetzung

20 bis 100 Gew.-%, bevorzugt 30 bis 99 Gew.-%, mehr bevorzugt 40 bis 98 Gew.%, der Mischung von Komponenten (a) und (b)
0 bis 80 Gew.-%, alternativ 0 bis 60 Gew.-%, weiter alternativ 1 bis 40 Gew.-% Reaktivverdünner (c)
0 bis 4 Gew.-%, bevorzugt 0,1 bis 3 Gew.-% Initiator
0 bis 60 Gew.-%, alternativ 2 bis 50 Gew.%, weiter alternativ 5 bis 45 Gew.% Füllstoff
0 bis 60 Gew.-%, alternativ 1 bis 55 Gew.%, weiter alternativ 5 bis 50 Gew.-% Fasern
0 bis 10 Gew.-%, alternativ 1 bis 5 Gew.% Zusatzstoffe (d).

In einer bevorzugten Ausführungsform kann die erfindungsgemäße Zusammensetzung, beispielsweise nach Zugabe von Additiven, Fasern und Füllstoffen, zur Herstellung von Erzeugnissen, wie Sheet Molding Compounds (SMC) und Bulk Molding Compounds (BMC) sowie anderer Compounds, verwendet werden.

Ein weiterer Gegenstand der vorliegenden Erfindung ist die Verwendung der erfindungsgemäßen härtbaren Zusammensetzung in einem Verarbeitungsverfahren, bevorzugt in einem der folgenden Verarbeitungsverfahren: Beschichten, Lackieren, Gießen, Tauchen, Laminieren, Spaltimprägnieren, Schleudern, Kleben, Harzinjektion, Pressen, Spritzguss, Profilziehen, Spachteln und Wickeln.

Ein weiterer Gegenstand der Erfindung ist die Verwendung der erfindungsgemäßen härtbaren Zusammensetzung und/oder den daraus erhaltenden Erzeugnissen z.B. in der Möbelindustrie, in der Medizin und im Gesundheitswesen, in der medizintechnischen Industrie, in Krankenhäusern, Arztpraxen, Altenheimen und Rehabilitationszentren, in der häuslichen Alten- und Krankenpflege, in der Lebensmittel- und Fleisch erzeugenden, -verarbeitenden und -verpackenden Industrie, in der Verpackungsindustrie, in der Lagerung und Logistik, in der Dichtungsindustrie, in der Tierzucht- und Agrarindustrie und der häuslichen Tierhaltung, in der Pharmaindustrie, in der Haushaltswarenindustrie, im Apparate-, Behälter-, Rohrleitungsbau, in der Elektro-, Kfz- und Bauindustrie, in der Luftfahrtindustrie, in der Textilindustrie, der Hygieneartikelindustrie, in der Sanitärindustrie, in der Sport-, Spielwaren- und Freizeitartikelindustrie, im Schiffsbau, im Bootsbau, der Wassersportindustrie, der Lüftungs- und Klimatechnik, der öffentlichen, häuslichen und industriellen Wasserversorgung, oder in der Wasseraufbereitung.

Die vorliegende Erfindung betrifft des Weiteren ein Verfahren zur Herstellung gehärteter Erzeugnisse, wobei man die erfindungsgemäße härtbare Zusammensetzung härtet. Die erhaltenen gehärteten Erzeugnisse weisen bevorzugt antimikrobielle Eigenschaften, insbesondere intrinsisch antimikrobielle Eigenschaften, auf.

In einer bevorzugten Ausführungsform kann die Härtung der erfindungsgemäßen Zusammensetzung in Gegenwart eines Lösungsmittels ausgeführt werden. Beispiele für geeignete Lösungsmittel sind Ethylacetat, Butylacetat, Aceton und Methylethylketon.

In einer alternativen Ausführungsform kann die Härtung auch in Abwesenheit eines Lösungsmittels durchgeführt werden.

Die Härtung kann bevorzugt in Gegenwart eines Radikalinitiators und anschließender thermischer Härtung bei 40°C bis 160°C ausgeführt werden. Für den Radikalinitiator gilt das vorstehend Beschriebene. Im Falle der Gegenwart eines Radikalinitiators kann die Härtung der erfindungsgemäßen härtbaren Zusammensetzung bei Temperaturen von 30°C bis 230°C, bevorzugt 30°C bis 200°C, mehr bevorzugt von 40 °C bis 180°C durchgeführt werden.

Alternativ kann die Härtung auch in Abwesenheit eines Radikalinitiators durchgeführt werden. Die Härtung kann beispielsweise durch Zufuhr von thermischer Energie durchgeführt werden. Bevorzugt können Temperaturen von 50°C bis 200°C, mehr bevorzugt von 70°C bis 190°C, insbesondere von 80°C bis 180°C verwendet werden.

In einer weiteren Ausführungsform kann die Härtung durch energiereiche Strahlung, wie Elektronenstrahlung, durchgeführt werden.

Ein weiterer Gegenstand der Erfindung ist ein Erzeugnis mit antimikrobieller Wirkung, welches durch die Härtung der erfindungsgemäßen härtbaren Zusammensetzung erhältlich ist. Bei der Härtung können alle oder ein Anteil der in der erfindungsgemäßen härtbaren Zusammensetzung vorkommenden reaktiven Doppelbindungen reagieren, sodass die Komponenten (a) und (b) quervernetzt werden.

Vorzugsweise wird das erfindungsgemäße Erzeugnis, zum Beispiel ein UP-Duromer oder VE- bzw. VEU-Duromer, nach dem erfindungsgemäßen Verfahren zur Herstellung gehärteter Erzeugnisse erhalten. Ein UP-Duromer besteht beispielsweise aus dem Polyester und oligomeren Brückenstrukturen, die sich aus der Komponente (b) gebildet haben und die vorzugsweise überwiegend eine mittlere Kettenlänge von 1,5 bis 4 monomeren Einheiten der Komponente (b) aufweisen.

Der E-Modul des erfindungsgemäßen UP-Duromers oder VE- bzw. VEU-Duromer liegt vorteilhafterweise in einem Bereich von 2000 bis 4000 $N/mm^2$. Die genannten Duromere weisen vorteilhafterweise eine Dehnung in einem Bereich von 0,5 bis 6 % auf. Sie sind vorzugsweise geruchsfrei.

Das erfindungsgemäße Erzeugnis kann faserverstärkt oder nicht verstärkt sein, mit Füllstoffen gefüllt oder ungefüllt sein und unabhängig davon in technischen Anwendungen der verschiedensten Art, in der Lebensmittelbranche, in Krankenhäusern und bei medizinischen Geräten, in Kühlschränken, Kühlhäusern und vielen anderen Bereichen eingesetzt werden. Das erfindungsgemäße Erzeugnis weist weiterhin ein antimikrobielles Verhalten auf. Das antimikrobielle Verhalten ist eine intrinsische Materialeigenschaft und wird bevorzugt durch eine kovalente Bindung der biozid

wirkenden Gruppe an das Polymer bewirkt. Die intrinsisch antimikrobielle Wirkung wird somit nicht (oder zumindest nicht ausschließlich) durch konventionelle, additiv zugegebene Biozide bewirkt. Damit unterscheidet sich die erfindungsgemäßen Zusammensetzung und die daraus erhaltenen Erzeugnisse signifikant vom heutigen Stand der Biozid-ausgerüsteten Kunststoffe, die üblicherweise mit Nanosilber, Isothiazolinonen, chlororganischen Verbindungen, Triazinderivaten, Verbindungen des Kupfers, Zinns, Zinks und Arsens sowie anderen Wirkstoffen arbeiten. Diese konventionellen Biozide sind wegen einer (meist langsamen) Abgabe an die Umwelt, teilweise schlechter biologischer Abbaubarkeit, eines Schwermetallgehalts, einer möglichen Anreicherung in einzelnen Organismen und/oder einer Verteilung und Verbreitung über die Nahrungsmittelkette umstritten. Mit den neuen intrinsisch antimikrobiellen Erzeugnissen werden diese Nachteile zuverlässig vermieden.

In einer bevorzugten Ausführungsform weist das erfindungsgemäße Erzeugnis mit antimikrobieller Wirkung eine Wasseraufnahme nach einem Tag von 0 bis 15% auf, bevorzugt 0,3 bis 14%, mehr bevorzugt 0,5 bis 13%, insbesondere 0,7 bis 12%.

In einer alternativ bevorzugten Ausführungsform weist das erfindungsgemäße Erzeugnis mit antimikrobieller Wirkung eine Wasseraufnahme nach sieben Tagen von 0,5 bis 35% auf, bevorzugt 1 bis 34 %, mehr bevorzugt 1,5 bis 33%, insbesondere 2 bis 32%.

Die Bestimmung der Wasseraufnahme wird in Anlehnung an die Norm DIN EN ISO 62:2008-05 durchgeführt. Hierfür wird ein quadratischer Probekörper (50 x 50 x 5 mm) eines erfindungsgemäßen antimikrobiellen Erzeugnisses in eine 1 1 Braunglasflasche gegeben und 16 Stunden bei 50°C getrocknet um die Masse $m_o$ zu erhalten. Nach der Trocknung werden 500 ml vollentsalztes Wasser in die Flaschen gegeben. Die Masse der Probenkörper wird entweder nach einem oder nach sieben Tagen ($m_1$ bzw.$m_7$) bestimmt. Hierfür werden die Probenkörper mit einem Tuch getrocknet und anschließend gewogen. Aus den Massen $m_0$ und $m_1$ bzw. $m_0$ und $m_7$ lässt sich die Wasseraufnahme des jeweiligen antimikrobiellen Erzeugnisses in % nach einem oder nach sieben Tagen bestimmen.

Zur Bestimmung der Wasseraufnahme wurden quadratische Platten (50 x 50 x 5 mm) gehärtet. Die Härtung ist eine UV-Härtung und erfolgt sauerstofffrei. Die jeweilige härtbare Zusammensetzung wird mit 1,75 Gew.-% des UV-Initiators Irgacure 819 (Bis(2,4,6-trimethylbenzoyl)phenylphosphinoxid) in eine Braunglasflasche gegeben und diese bis zum vollständigen Lösen des Initiators auf einen Rollbock gelegt. Um einen quadratischen Probenkörper mit der Abmessung 50 x 50 x 5 mm härten zu können, wird eine Kunststoff-Konstruktion angefertigt. Nach dem Zusammensetzen der Konstruktion wird die härtbare Zusammensetzung in die Form gegossen. Damit eine sauerstofffreie Härtung gewährleistet ist, wird die Konstruktion in einer verschlossenen Kunststoffdose 5 Minuten mit Stickstoff gespült. Anschließend folgte eine Belichtungszeit von 15 Minuten im Suntester der Fa. Original Hanau, während kontinuierlich mit Stickstoff gespült wird. Nach den 15 Minuten ist die Unterseite der Probekörper noch weich, aber nicht klebrig, sodass alle Probenkörper nochmal 5 Minuten von der anderen Seite belichtet werden.

In einer bevorzugten Ausführungsform weist das erfindungsgemäße Erzeugnis mit antimikrobieller Wirkung eine Glasübergangstemperatur $T_G$ (gemessen bei 1 Hz) von 40°C bis 140°C, bevorzugt von 45°C bis 130°C, insbesondere von 50°C bis 120°C auf.

In einer bevorzugten Ausführungsform weist das erfindungsgemäße Erzeugnis mit antimikrobieller Wirkung eine Glasübergangstemperatur $T_G$ (gemessen bei 10 Hz) von 50°C bis 150°C, bevorzugt von 55°C bis 140°C, insbesondere von 60°C bis 120°C auf.

Die Glasübergangstemperatur hat einen maßgeblichen Einfluss auf die Werkstoffeigenschaften eines Erzeugnisses. Diese ist durch den Übergang von einem harten, spröden glasartigen Zustand zu einem viskoelastischen Körper oder umgekehrt charakterisiert. Unterhalb der Glasübergangstemperatur sind die Kettensegmente steif und unbeweglich, was den spröden und harten Zustand erklärt. Die $T_G$ wird vor allem vom chemischen Aufbau des Netzwerkes und der Vernetzungsdichte bestimmt.

Die verwendete DMA 242 der Fa. Netzsch ermöglicht die Bestimmung des Speicher- und Verlustmoduls, sowie des Verlustfaktors einer Probe als Funktion der Temperatur, Zeit und Frequenz einer aufgebrachten sinusförmigen Schwingungsbelastung.

Zur Herstellung der benötigten Probekörper wurden die in den Ausführungsbeispielen hergestellten, mit 2 Gew.-% Initiator (V601 Fa. Wako) versetzten Harze verwendet.

Hierzu wurden drei 15x15 cm Lagen Saertex®-Glasfasergelege (biaxial 0°/90°/ Typ: S14EB540-00620-T1300-487000) mit dem jeweiligen Harz imprägniert, in eine verschraubbare, mit Mylar®-Folie ausgekleidete 150x150x5 mm Plattenform gelegt und durch Andrücken mit einem Spatel möglichst von Luftblasen befreit. Anschließend wurde die Kavität der Form mit weiterem Harz vollständig gefüllt, mit Mylar®-Folie abgedeckt und mit der oberen Werkzeugplatte durch Verschraubung verschlossen. Die Härtung erfolgte für jeweils 2 h bei 70, 80, 90 °C und 120°C in einem Trockenschrank unter Ausschluss von Sauerstoff.

Nach Abkühlen wurden die GFK-Platten mit einer Tischkreissäge zugeschnitten und ggf. mit einem Schleifband auf die erforderliche Probengröße gebracht.

Parameter und Messeinstellungen bei den durchgeführten DMA-20 Analysen:

Probenabmessungen: 50 x 10 x 5 mm
Deformationsmodus: Zweiarmige Biegung
Amplitude: 30 μm
Dynamische Kraft: 7,5 N
Statische Kraft: 4 N
Temperaturbereich: 20 - 180 °C
Heizrate: 2 K/min
Frequenz: 1 Hz / 10 Hz
Atmosphäre: $N_2$
Flussrate N2: 5 ml/min

Ein weiterer Gegenstand der Erfindung ist die Verwendung der erfindungsgemäßen härtbaren Zusammensetzung zur Herstellung von beispielsweise folgenden Produkten: Möbel und Möbeloberflächen, Kleber, Furniere und Papierlaminate, Knöpfe, Griffe, Tasten, Schalter und Gehäuse, Platten, Fußböden, Rohre, Profile, Tanks und Behälter aller Art, insbesondere für Trinkwasser, Lebensmittel und Öle, Auskleidungen aller Art, Dachbeschichtungen, Lichtplatten, Dichtmassen, Kitte, Dübelmassen, Polymerbeton, Agglomarmor, Küchenspülen, Duschtrassen, Badewannen, Waschbecken, Klobrillen, Gartenmöbel, Gartenzäune, Fassadenplatten, Kellerfensterschächte, Fahrzeugteile, Leuchtenträger, Windkraftanlagen, Imprägnierungen, Bindemittel, Vergussmassen, Spachtelmassen und/oder Reaktionsmörtel, Beschichtungen, Lacke, Gelcoats, Topcoats, Schiffe, Boote, Freizeitartikel. Bevorzugt ist die Verwendung des erfindungsgemäßen Erzeugnisses zur Herstellung von Klebstoff, Dichtungsmasse, Vergussmasse, Beschichtung oder Formkörper, insbesondere zur Herstellung von antimikrobiellen Beschichtungen und Formkörpern.

**Beispiele**

Die Erfindung soll durch nachfolgende Beispiele veranschaulicht werden. Hierzu wird unter den Punkten 1 und 2 zunächst ein allgemeines Herstellungsverfahren beschrieben. Unter Punkt 3 wird die Messung der antimikrobiellen Aktivität erläutert und im Punkt 4 sind die Ergebnisse der hergestellten Erzeugnisse zusammengefasst.

**1.1 Herstellung der ungesättigten Polyester (a)**

Zur Herstellung wurden jeweils dieselben Kondensationsbedingungen gewählt, um eine gute Vergleichbarkeit der Produkte zu ermöglichen. Die genaue Zusammensetzung der hergestellten Polyester ergibt sich aus der Ergebnistabelle unter Punkt 4.

Die jeweiligen Diole, die Itaconsäure, sowie 400 ppm Fascat 4100 (Butylzinnsäure) als Veresterungskatalysator und 300 ppm Hydrochinon als Inhibitor wurden in einen 2 1-Vierhalskolben gefüllt und unter das Rührwerk gespannt. Um das Abdestillieren der Edukte zu vermeiden, wurde eine Füllkörperkolonne verwendet. Während der gesamten Reaktionszeit wurde mit Stickstoff gespült, um ein Gelieren zu vermeiden und gleichzeitig die Entfernung des Kondensationswassers zu begünstigen. Zur genauen Temperaturkontrolle befand sich ein Thermometer im Kolben. Anschließend wurden die Rohstoffe bei 100°C aufgeschmolzen. Sobald die Schmelze rührfähig war, wurde die Temperatur auf 140°C erhöht und eine Stunde gehalten, dann auf 150°C erhöht und 0,75 Stunden gehalten. Dann wurde die Temperatur auf 160°C erhöht und halbstündig um 10°C erhöht, bis zu einer Temperatur von 180°C. Die Temperatur wurde für 0,5 Stunden bei 180°C gehalten, anschließend auf 185°C erhöht und für sechs Stunden gehalten. Das während der Reaktion entstandene Kondensationswasser wurde aufgefangen, um den Fortschritt der Reaktion beurteilen zu können.

**1.2 Herstellung der Vinylesterurethane (a)**

In einen Dreihalskolben wurden 0,25 g (600 ppm) 3,5 Di-tert.-butyl-4-hydroxyltoluol (BHT), 0,03 g (60 ppm) 4-Methoxyphenol (HQME), 57,68 g (0,4 mol) 2-Hydroypropylmethacrylat (HPMA), 0,2 mol des Kettenverlängers (tert.-Butyl-bis-hydroxyethylamin bzw. Dipropylenglykol) und 200 ml wasserfreies Aceton gegeben. Die Mischung wurde unter ständigem Rühren auf 65°C erwärmt. Nach Erreichen der Reaktionstemperatur wurden 101,08 g (0,404 mol) Lupranat MI der BASF SE (49 Gew.-% 4,4'-Methylendiphenyldiisocyanat, 49 Gew.-% 2,4'-Methylendiphenyldiisocyanat, 2 Gew.-% 2,2'-Methylendiphenyldiisocyanat) so zugetropft, dass die Reaktionsmischung eine konstante Temperatur zwischen 65°C und 75°C erreichte. Die entstehende Wärme wurde über ein Wasserbad abgeführt. Nach vollständigem Zutropfen (25 Minuten) wurde die Mischung 1 Stunde nachgerührt.

**1.3 Vinylester (a)**

In den vorliegenden Versuchen wird als Vinylester (1-Methylethylidene)bis[4,1-phenyleneoxy(2-hydroxy-3,1-propanediyl)]bismethacrylat (M=512,59 g/mol) verwendet, erhältlich bei Sigma Aldrich, Produktnummer: 494356.

**2. Herstellung der härtbaren Zusammensetzung sowie des gehärteten Erzeugnisses**

2.1 Um die härtbare Zusammensetzung (UP-Harz) herzustellen, wurde dem ungesättigten Polyester (a) die entsprechende Menge an Acrylat- und/oder Methacrylatkomponente (b) zugesetzt. Durch Rotieren auf einem Rollbock lag nach ca. 14 Tagen ein transparentes Harz vor.

2.2 Um die härtbare Zusammensetzung (VEU-Harz) herzustellen, wurde dem Vinylesterurethan (a) die entsprechende Menge an Acrylat- und/oder Methacrylatkomponente (b) zugesetzt und das Aceton erst bei Normaldruck und anschließend im Vakuum bis zu einer konstant bleibenden Kolbengesamtmasse abgetrennt.

2.3 Um die härtbare Zusammensetzung (VE-Harz) herzustellen, wurden dem Vinylester (a) die entsprechende Menge an Acrylat- und/oder Methacrylatkomponente (b) zugesetzt.

Zur jeweiligen hergestellten Zusammensetzung wurden anschließend 1,75 Gew.-% des UV-Initiators Irgacure 819 hinzugefügt und dieser gelöst. Etwa 8 g der transparenten mit Initiator versetzten Lösung wurden auf verschiedene Glaspetrischalen gegeben und unter Stickstoffatmosphäre in einem Suntester der Fa. Original Hanau für fünf Minuten belichtet, um eine gehärtete Probe zu erhalten. Das erhaltene, voll ausgehärtete Erzeugnis (Duromer) war klebfrei und hart. Das Erzeugnis war praktisch geruchsfrei und zeigte exzellente antimikrobielle Eigenschaften.

**3. Untersuchung der antimikrobiellen Eigenschaft**

Die bei den antimikrobiellen Untersuchen angewendete Methode basiert auf dem japanischen Standard JIS Z 2801:2000. Testmikroorganismus für die Versuche war der pathogene Keim Staphylococcus aureus. Es wurde ein Standardkeim (ATCC 6538) verwendet, welcher nicht multiresistent ist.

Bei jedem Testkeim (hier Staphylococcus aureus) stellte man unter den Bedingungen der Herstellung der Ausgangslösung oder Ausgangssuspension einen Mikroorganismus-spezifischen Keimgehalt ein. Bei Staphylococcus aureus betrug dieser Wert $10^8$ Keime pro ml (siehe auch Ausführungen weiter unten).

Die Bestimmung der antimikrobiellen Aktivität erfolgte durch den Vergleich des Wachstums von Staphylococcus aureus auf Referenzoberflächen und auf den Probenmaterialien.

Als Referenzmaterial dienten leere Petrischalen. Die Proben bestanden aus Petrischalen, in die jeweils eine dünne Schicht einer Polymerprobe gegossen war. Für jede Versuchsreihe wurden drei Referenzplatten zur Bestimmung des Anfangskeimgehaltes (separater Versuch unabhängig von der Untersuchung des antimikrobiellen Verhaltens) sowie drei Referenzplatten und drei Probenplatten zur Bestimmung des Oberflächenkeimgehaltes nach der Inkubation herangezogen.

Alle Platten wurden mit 400 μl Staphylococcus aureus Impfsuspension beimpft, die auf einen Keimgehalt von $4{,}0\text{-}10 \cdot 10^5$ KbE/ml eingestellt war.

Die aufgebrachte Impfsuspension wurde mit einer sterilen PP-Folie abgedeckt, um Verdunstung zu vermeiden. Unmittelbar nach dem Beimpfen wurden die drei Probenplatten und drei Referenzplatten in einen Inkubationsschrank überführt und bei 35°C und 90 % Luftfeuchte für 2 h bzw. 24 h gelagert.

Zur Bestimmung des Keimgehaltes in der Beimpfungslösung (Anfangskeimgehalt) wurden je drei Referenzplatten direkt nach dem Beimpfen, unter Zugabe von 10 ml SCDLP-Bouillon (Soja-Casein-Pepton-Bouillon mit Lecithin und Polyoxyethylenmedium) in die Petrischale, ausgewaschen. Die Folie wurde mit einer sterilen Pinzette gewendet und mehrmals mit einer 1 ml-Pipette über- beziehungsweise unterspült. Die Petrischale wurde in Form einer Acht geschwenkt, bevor 1 ml der Auswaschlösung in die erste Verdünnungsstufe pipettiert wurde. Nach Anlegen einer Verdünnungsreihe wurde der Lebendkeimgehalt mittels Drop-Plate-Verfahren bestimmt. Beim Drop-Plate-Verfahren wurden - im Doppelansatz - auf einer Plate-Count-(PC)-Agar-Platte in jeden Sektor der jeweiligen Verdünnungsstufe 5 Tropfen je 10 μl aufgebracht. Die Bebrütung der Platten erfolgte für 2 h bzw. 24 h bei 37°C.

Das Auswaschen und die Bestimmung der Lebendkeimzahl auf den Referenz- und Probenplatten nach der Inkubation erfolgten in gleicher Art und Weise wie die Bestimmung des Anfangskeimgehaltes. Bei den Probenplatten wurde zusätzlich zur Erhöhung der Nachweisgrenze der Keimgehalt der direkten Auswaschlösung im Plattengussverfahren bestimmt. Hierzu wurde, ebenfalls im Doppelansatz, je 1 ml der Lösung in eine leere Petrischale gegeben und mit flüssigem, auf 45°C temperierten PC-Agar übergossen. Durch Schwenken in Form einer Acht wurden die Bakterien im Agar verteilt. Die Bebrütung der Platten erfolgte für 48 h bei 37°C.

Nach der Inkubation wurden die Kolonien in der Petrischale gezählt. Dabei wurde unterstellt, dass aus jedem

Keim eine sichtbare Kolonie geworden war. Die Kolonien waren nach der Bebrütung mit bloßem Auge sichtbar. Alternativ konnte ein Lichttisch zur Hilfe herangezogen werden, um die Keime besser zu erkennen.

Anhand des Volumens der Beimpfungslösung und der verwendeten Verdünnungsverhältnisse konnte auf die Lebendkeimzahl der Mikroorganismen pro Volumeneinheit (d.h. pro ml) Beimpfungslösung rückgeschlossen werden. Die Berechnung erfolgte anhand des gewogenen arithmetischen Mittels mit folgender Formel:

$$\bar{c} = \frac{\sum c}{n_1 \cdot 1 + n_2 \cdot 0{,}1} \cdot d$$

Mit

- $\bar{c}$ gewogenes arithmetisches Mittel
- $\Sigma c$ Summe der Kolonien aller Petrischalen oder Sektoren, die zur Berechnung herangezogen werden
- $n_1$ Anzahl der Petrischalen oder Sektoren der niedrigsten auswertbaren Verdünnungsstufe
- $n_2$ Anzahl der Petrischalen oder Sektoren der nächst höheren Verdünnungsstufe
- $d$ Faktor der niedrigsten ausgewerteten Verdünnungsstufe

Beim Plattengussverfahren waren Petrischalen mit bis zu 300 KbE (Kolonie bildende Einheiten) zählbar. Beim Drop-Plate-Verfahren waren nur Platten bis 150 KbE pro Sektor auswertbar.

Bei der Bestimmung der Lebendkeimzahl pro ml musste der Verdünnungsfaktor $F_1$ beachtet werden. Dieser ergab sich aus der Summe des Volumens der SCDLP-Bouillon und dem Volumen der Bakteriensuspension auf der beimpften Platte dividiert durch das Volumen der Bakteriensuspension auf dieser beimpften Platte.

$$F_1 = \frac{10\ ml + 0{,}4\ ml}{0{,}4\ ml} = 26$$

$F_1$ Verdünnungsfaktor der SCDLP-Bouillon.

Für die Gesamtkeimzahl auf den beimpften Proben- beziehungsweise Referenzplatten im Plattengussverfahren ergab sich somit folgende Formel:

$$KbE = \frac{\sum c}{n_1 \cdot 1 + n_2 \cdot 0{,}1} \cdot d \cdot F_1$$

Beim Drop-Plate-Verfahren war noch ein weiterer Verdünnungsfaktor relevant, da ein Viertel einer Platte nur mit 50 μl, also 0,05 ml, beimpft wurde. Um auf den Keimgehalt pro ml zu schließen, mussten 0,05 ml auf 1 ml umgerechnet werden, indem man mit 20 multiplizierte.

$$F_2 = 26 \cdot 20$$

$F_2$ Verdünnungsfaktor, um die KbE beim Drop-Plate-Verfahren pro ml zu erhalten.

Entsprechend wurde die Gesamtkeimzahl der beimpften Proben- beziehungsweise Referenzplatten für das Drop-Plate-Verfahren unter Berücksichtigung aller Verdünnungsfaktoren nach folgender Formel berechnet:

$$KbE = \frac{\sum c}{n_1 \cdot 1 + n_2 \cdot 0{,}1} \cdot d \cdot F_2$$

Für die Berechnung der antimikrobiellen Aktivität wurden in jeder Versuchsreihe die Einzelergebnisse der Lebendkeimzahl für die Platten als einfaches arithmetisches Mittel zusammengefasst und daraus die $Log_{10}$-Reduktion zwischen Proben und Referenzplatten ermittelt.

Die Berechnung erfolgte mittels nachstehender Formel:

$$\log_{10} - Reduktion = \log_{10}(KG)_{Ref(x)} - \log_{10}(KG)_{Pr(x)}$$

wobei

$(KG)_{Ref(x)}$ KbE auf den Referenzplatten zum Zeitpunkt x und
$(KG)_{Pr(x)}$ KbE auf den Probenplatten zum Zeitpunkt x ist.

Laut JIS Z 2801:2000 ist eine antimikrobielle Aktivität bei einer Log-Reduktion von mindestens 2,0 nach 24 Stunden Einwirkzeit gegeben.

Waren auf den Agar-Platten der Proben bei der niedrigsten Verdünnungsstufe im Plattengussverfahren keine auszählbaren Kolonien vorhanden, wurde das Ergebnis mit <10 KbE/ml angegeben entsprechend der Vorgabe im Teststandard.

**4. Komponenten, Zusammensetzung, Charakterisierung und Ergebnisse der dynamisch-mechanischen und antimikrobiellen Untersuchungen der gehärteten Erzeugnisse:**

| Polyester, Vinylesterurethan, Vinylester (a) | | | | | Komponente (b) | | | Erzeugnis | | Antimikrobielle Wirksamkeit | | | |
|---|---|---|---|---|---|---|---|---|---|---|---|---|---|
| Zusammensetzung[I)] | Mittlere Molmasse pro reaktiver Doppelbindung [g/mol] | Säurezahl [mg KOH/g UP] | Schmelz Viskosität[II)] [mPas] | Massenmittlere Molmasse (Mw) [g/mol] | Bezeichnung | Molanteil | [Gew.-%] | Wasseraufnahme nach 7 Tagen [%] | Glastemperatur $T_G$ bei 10 Hz [°C] | Anfangskeimgehalt (log KbE/ml) | Referenzkeimgehalt nach 24h (log KbE/ml) | Oberflächenkeimgehalt Probe nach 24h (log KbE/ml) | Log-Reduktion |
| $ITS_1HPN_{0,5}NPG_{0,5}$ | 248,3 | 44,1 | 90 (10000 1/s) | 5102 | TBAEMA | 1,34 | 50 | 5,98 | 77,6 | 5,4 | 7 | 2,1 | 4,9 |
| $ITS_1HPN_{0,5}NPG_{0,5}$ | | | | | TBAEMA | 1,64 | 55 | 7,00 | 82 | 5,4 | 7 | 1 | 6 |
| $ITS_1HPN_{0,5}NPG_{0,5}$ | | | | | TBAEMA | 2,01 | 60 | 7,77 | 85,2 | 5,4 | 7 | 1,8 | 5,2 |
| $ITS_1HPN_{0,5}NPG_{0,5}$ | | | | | TBAEMA | 2,49 | 65 | 7,74 | 86,9 | 5,3 | 7,3 | 2,7 | 4,6 |
| $ITS_1HPN_1$ | 298,4 | 44,4 | 45 (10000 1/s) | 4178 | TBAEMA | 1,61 | 50 | 8,88 | 74,5 | 5,3 | 7,1 | 1 | 6,1 |
| $ITS_1HPN_1$ | | | | | TBAEMA | 1,96 | 55 | 9,85 | 84,4 | 5,5 | 7,3 | 1 | 6,3 |
| $ITS_1HPN_1$ | | | | | TBAEMA | 2,42 | 60 | 8,54 | 67,7 | 5,5 | 7,3 | 1 | 6,3 |
| $ITS_1HPN_1$ | | | | | TBAEMA | 3 | 65 | 15,61 | 63,6 | 5,4 | 7,3 | 1 | 6,3 |
| $ITS_1HPN_{0,5}CHDM_{0,5}$ | 268,3 | 31,5 | 290 (10000 1/s) | 8786 | TBAEMA | 1,45 | 50 | 2,89 | 88,7 | 5,3 | 7,3 | 1 | 6,3 |
| $ITS_1N\ PG_{0,5}CH\ D_{0,5}$ | 218,3 | 31,7 | 620 (5000 1/s) | 7894 | TBAEMA | 1,43 | 55 | 2,78 | 94,1 | 5,3 | 7,4 | 1,3 | 6,1 |
| $ITS_1NPG_{0,5}CHDM_{0,5}$ | | | | | TBAEMA | 1,77 | 60 | 4,84 | 92,1 | 5,3 | 7,3 | 3 | 4,5 |
| $ITS_1HPN_{0,5}\ TCDDM_{0,5}$ | 294,3 | 27,1 | 470 (10000 1/s) | 10069 | TBAEMA | 2,38 | 60 | 3,21 | 89,2 | 5,3 | 7,4 | 2,9 | 4,5 |
| $ITS_1NPG_{0,5}TCDDM_{0,5}$ | 244,3 | 27,5 | 700 (2500 1/s) | 10571 | TBAEMA | 1,61 | 55 | 2,87 | 91,1 | 5,4 | 7,7 | 1 | 6,7 |
| $ITS_1Dianol220_1$ | 410,5 | 12,8 | 720 (2500 1/s) | 50230 | TBAEMA | 3,32 | 60 | --- | 68,2 | 5,3 | 7,5 | 1 | 6,5 |
| $ITS_1Dianol220_1$ | | | | | TBAEMA | 4,11 | 65 | 8,64 | 67,4 | 5,3 | 7,5 | 1 | 6,5 |

(fortgesetzt)

| Polyester, Vinylesterurethan, Vinylester (a) | | | | | Komponente (b) | | | Erzeugnis | | Antimikrobielle Wirksamkeit | | | |
|---|---|---|---|---|---|---|---|---|---|---|---|---|---|
| Zusammensetzung[I)] | Mittlere Molmasse pro reaktiver Doppelbindung [g/mol] | Säurezahl [mg KOH/g UP] | Schmelz Viskosität[II)] [mPas] | Massenmittlere Molmasse (Mw) [g/mol] | Bezeichnung | Molanteil | [Gew.-%] | Wasseraufnahme nach 7 Tagen [%] | Glastemperatur $T_G$ bei 10 Hz [°C] | Anfangs keimgehalt (log KbE/ml) | Referenzkeimgehalt nach 24h (log KbE/ml) | Oberflächenkeimgehalt Probe nach 24h (log KbE/ml) | Log-Reduktion |
| $ITS_1NPG_{1,0}$ | 198,3 | 46,5 | 260 (10000 1/s) | --- | TBAEMA | 2,5 | --- | 5,89 | 85,7 | 5,3 | 7,7 | 3,9 | 3,8 |
| $ITS_1NPG_{0,9}$ $CHDM_{0,1}$ | 202,3 | 49,7 | 280 (10000 1/s) | 4363 | TBAEMA | 2,5 | --- | 6,14 | 93,4 | 5,3 | 7,7 | 3 | 4,7 |
| $ITS_1NPG_{0,1}CHDM_{0,2}$ | 206,3 | 47,3 | 600 (10000 1/s) | 4434 | TBAEMA | 2,25 | --- | 5,73 | 94,2 | 5,3 | 7,7 | 3,9 | 3,8 |
| $ITS_1NPG_{0,8}CHDM_{0,2}$ | | | | | TBAEMA | 2,5 | --- | 5,18 | 91,3 | 5,3 | 7,7 | 3 | 4,7 |
| $ITS_1NPG_{0,7}CHDM_{0,3}$ | 210,3 | 43,4 | 970 (10000 1/s) | 4914 | TBAEMA | 2,5 | --- | 4,71 | 87,9 | 5,3 | 7,7 | 4,5 | 3,2 |
| $ITS_1NPG_{0,6}CHDM_{0,4}$ | 214,3 | 42,2 | 480 (10000 1/s) | 6008 | TBAEMA | 2,5 | --- | 4,14 | 97,3 | 5,4 | 7,7 | 4,2 | 3,5 |
| $ITS_1NPG_{0,5}CHDM_{0,5}$ | 218,3 | 41,7 | 580 (10000 1/s) | 5901 | TBAEMA | 2,5 | --- | 4,21 | 95,7 | 5,3 | 7,7 | 4,8 | 2,9 |
| $ITS_1NPG_{0,4}CHDM_{0,6}$ | 222,3 | 33,1 | 900 (2500 1/s) | 6422 | TBAEMA | 2,5 | --- | 4,48 | 91,7 | 5,3 | 7,7 | 5,3 | 2,4 |

(fortgesetzt)

| Polyester, Vinylesterurethan, Vinylester (a) | | | | | Komponente (b) | | | Erzeugnis | | Antimikrobielle Wirksamkeit | | | |
|---|---|---|---|---|---|---|---|---|---|---|---|---|---|
| Zusammensetzung[l)] | Mittlere Molmasse pro reaktiver Doppelbindung [g/mol] | Säurezahl [mg KOH/g UP] | Schmelz Viskosität[ll)] [mPas] | Massenmittlere Molmasse (Mw) [g/mol] | Bezeichnung | Molanteil | [Gew.-%] | Wasseraufnahme nach 7 Tagen [%] | Glastemperatur $T_G$ bei 10 Hz [°C] | Anfangskeimgehalt (log KbE/ml) | Referenzkeimgehalt nach 24h (log KbE/ml) | Oberflächenkeimgehalt Probe nach 24h (log KbE/ml) | Log-Reduktion |
| $HPMA_1MDI_{1,01}TBBHE\ A_{0,5}$ | | | | | DMAEM A | 4,53 | 60 | 6,79 | 98,8 | 5,3 | 8 | 2 | 6 |
| $HPMA_1MDI_{1,01}TBBHE\ A_{0,5}$ | | | | | DMAEM A | 5,61 | 65 | 17,26 | 92,1 | 5,3 | 8 | 1 | 7 |
| $HPMA_1MDI_{1,01}TBBHE\ A_{0,5}$ | | | | | TBAEMA | 2,56 | 50 | 1,03 | 109,2 | 5,3 | 8 | 1 | 7 |
| $HPMA_1MDI_{1,01}TBBHE\ A_{0,5}$ | 475,0 | | ----- | | TBAEMA | 3,13 | 55 | 1,37 | 98,6 | 5,3 | 8 | 1 | 7 |
| $HPMA_1MDI_{1,01}TBBHE\ A_{0,5}$ | | | | | TBAEMA | 3,84 | 60 | 1,48 | 106,1 | 5,3 | 8 | 1,1 | 6,9 |
| $HPMA_1MDI_{1,01}TBBHE\ A_{0,5}$ | | | | | TBAEMA | 4,76 | 65 | 1,96 | 92,4 | 5,3 | 8 | 1 | 7 |
| $HPMA_1MDI_{1,01}TBBHE\ A_{0,5}$ | | | | | TBAEMA | 5,98 | 70 | 2,71 | 97,7 | 5,3 | 8 | 1 | 7 |
| $HPMA_1MDI_{1,01}DPG_{0,5}$ | | | | | DMAEM A | 3,59 | 55 | 4,89 | 105,5 | 5,3 | 8,1 | 5,1 | 3 |
| $HPMA_1MDI_{1,01}DPG_{0,5}$ | | | | | DMAEM A | 5,45 | 65 | 11,39 | 94,3 | 5,3 | 8 | 1 | 7 |
| $HPMA_1MDI_{1,01}DPG_{0,5}$ | | | | | DMAEM A | 6,85 | 70 | 32,76 | 85,8 | 5,3 | 8 | 1 | 7 |
| $HPMA_1MDI_{1,01}DPG_{0,5}$ | | | | | TBAEMA | 2,49 | 50 | 1,26 | 104,1 | 5,3 | 8,1 | 1,5 | 6,6 |
| $HPMA_1MDI_{1,01}DPG_{0,5}$ | 461,5 | | ----- | | TBAEMA | 3,04 | 55 | 1,33 | 100,2 | 5,3 | 8,1 | 1,2 | 6,9 |
| $HPMA_1MDI_{1,01}DPG_{0,5}$ | | | | | TBAEMA | 3,73 | 60 | 2 | 99,2 | 5,3 | 8,1 | 1 | 7,1 |
| $HPMA_1MDI_{1,01}DPG_{0,5}$ | | | | | TBAEMA | 4,63 | 65 | 2,21 | 97 | 5,3 | 8,1 | 1 | 7,1 |
| $HPMA_1MDI_{1,01}DPG_{0,5}$ | | | | | TBAEMA | 5,81 | 70 | 3,65 | 95,1 | 5,3 | 8,1 | 1 | 7,1 |
| (1-Methylethylidene)bis [4,1-phenyleneoxy(2-hydroxy-3,1-propanediyl)]-bismethacrylat | 256,3 | | ----- | | TBAEMA | 2,08 | 60 | --- | 94,5 | 5,3 | 8,1 | 3,7 | 4,4 |

I)

| | |
|---|---|
| ITS entspricht Itaconsäure | HPN entspricht Hydroxypivalinsäureneopentylglykolester |
| NPG entspricht Neopentylglykol | CHDM entspricht 1,4 Cyclohexandimethanol |
| TCDDM entspricht Tricyclodecandimethanol | Dianol 220 entspricht diethoxyliertem Bisphenol A |
| TBAEMA entspricht tert.-Butylaminoethylmethacrylat | |
| HPMA entspricht Hydroxypropylmethacrylat | MDI entspricht Methylendiisocyanat |
| TBBHEA entspricht tert.-Butyl-bis-hydroxyethylamin | DPG entspricht Dipropylenglykol |

II)

Das Gerät verfügt über verschiedene Schergeschwindigkeiten, die Schergeschwindigkeit wird so gewählt, dass die Messung mit maximaler Empfindlichkeit erfolgt. Die Schergeschwindigkeit, bei der die Viskositätsmessung erfolgte, ist in Klammern angegeben.

Es ist festzustellen, dass mit den hergestellten Erzeugnissen die Aufgaben der Erfindung gelöst werden können, denn:

1. Bei allen hergestellten Erzeugnissen zeigt sich eine ausgeprägte antimikrobielle Wirksamkeit. Es handelt sich hierbei um eine intrinsisch antimikrobielle Wirkung.
2. Die Erzeugnisse zeigen alle eine Glasübergangstemperatur, die für eine werkstoffliche Verwendung geeignet ist.

## Patentansprüche

**1.** Härtbare Zusammensetzung, enthaltend

(a) eine Verbindung mit einer radikalisch reaktiven Doppelbindung ausgewählt aus einem ungesättigten Polyester, einem Vinylester und Vinylesterurethan, und Mischungen davon und
(b) ein Methacrylat oder Acrylat ausgewählt aus tert.-Butylaminoethylmethacrylat, Dimethylaminoethylmethacrylat, Diethylaminoethylmethacrylat, tert.-Butylaminoethylacrylat, Dimethylaminoethylacrylat, Diethylaminoethylacrylat und Gemischen daraus.

**2.** Härtbare Zusammensetzung nach Anspruch 1, wobei der ungesättigte Polyester erhältlich ist durch Umsetzung einer Dicarbonsäure oder eines Derivates der Dicarbonsäure und einem Diol, wobei es sich bei der Dicarbonsäure um eine Verbindung der Formel (I) handelt

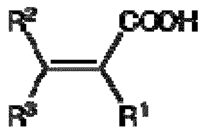

Formel (I)

wobei

$R^1$ unabhängig ausgewählt ist aus H, $CH_3$ und $CH_2COOH$, und
$R^2$ und $R^3$ unabhängig ausgewählt sind aus H, $CH_3$ und COOH.

**3.** Härtbare Zusammensetzung nach Anspruch 2, wobei es sich bei der Dicarbonsäure um Fumarsäure, Mesaconsäure, Maleinsäure, Citraconsäure oder Itaconsäure oder Anhydride davon handelt.

**4.** Härtbare Zusammensetzung nach Anspruch 2 oder 3, wobei es sich bei der Dicarbonsäure um Itaconsäure oder deren Anhydrid handelt.

**5.** Härtbare Zusammensetzung nach einem der Ansprüche 2 bis 4, wobei das Diol ausgewählt ist aus Gruppe 1,2-Ethylenglykol, 1,2-Propandiol, 1,3-Propandiol, Diethylenglykol, Dipropylenglykol, Triethylenglykol, Tripropylenglykol, Neopentylglykol, Butan-1,3-diol, Butan-1,2-diol, Butan-2,3-diol, Butan-1,4-diol, 2-Butyl-2-ethylpropandiol-1,3,

2-Metyl-propan-1,3-diol, 2,2,4-Trimethylpentandiol-1,3, 2-Ethyl-2-methylpropan-1,3-diol, 2,2-Diethylpropandiol-1,3, 2-Propyl-2-methyl-propandiol-1,3, Pentan-1,5-diol, Hexan-1,6-diol, 2,4-Dimethyl-2-ethylhexan-1,3-diol, Hydroxypivalinsäureneopentylglykolester, Isosorbid, Tricyclodecandimethanol, perhydriertes Bisphenol A, 2,2,4,4-Tetramethylcyclobutandiol-1,3, 1,4-Cyclohexandimethanol, ethoxyliertes und propoxyliertes Bisphenol A oder Mischungen davon.

**6.** Härtbare Zusammensetzung nach Anspruch 1, wobei der Vinylester erhältlich ist durch die Umsetzung von Methacrylsäure und/oder Acrylsäure mit Bisphenol A-, Bisphenol F- und Novolak-basierten Glycidylethern.

**7.** Härtbare Zusammensetzung nach Anspruch 1, wobei das Vinylesterurethan erhältlich ist durch die Umsetzung von Hydroxyalkylacrylat und/oder Hydroxyalkylmethacrylat mit Diisocyanaten und/oder Triisocyanaten und/oder Polyisocyanaten und gegebenenfalls Diol und/oder Triol und/oder Tetrol.

**8.** Härtbare Zusammensetzung nach einem der Ansprüche 1 bis 7 enthaltend
20 bis 100 Gew.-% der Mischung von Komponenten (a) und (b)
0 bis 80 Gew.-% Reaktivverdünner (c)
0 bis 4 Gew.-% Initiator
0 bis 60 Gew.-% Füllstoff
0 bis 60 Gew.-% Fasern
0 bis 10 Gew.-% Zusatzstoffe (d),
bezogen auf das Gesamtgewicht der härtbaren Zusammensetzung.

**9.** Verwendung der Zusammensetzung nach einem der Ansprüchen 1 bis 8 in einem der folgenden Verarbeitungsverfahren: Beschichten, Lackieren, Gießen, Tauchen, Laminieren, Spaltimprägnieren, Schleudern, Kleben, Harzinjektion, Pressen, Spritzguss, Profilziehen, Spachteln und Wickeln.

**10.** Verfahren zur Herstellung gehärteter Erzeugnisse, wobei eine härtbare Zusammensetzung nach einem der Ansprüche 1 bis 8 gehärtet wird.

**11.** Verfahren nach Anspruch 10, wobei die härtbare Zusammensetzung nach einem der Ansprüche 1 bis 8 einen Photoinitiator enthält und durch Bestrahlung gehärtet wird.

**12.** Erzeugnis mit antimikrobieller Wirkung erhältlich durch die Härtung einer härtbaren Zusammensetzung nach einem der Ansprüche 1 bis 8.

**13.** Erzeugnis nach Anspruch 12, wobei das Erzeugnis eine Wasseraufnahme nach sieben Tagen von 0,5 bis 35% aufweist.

**14.** Erzeugnis nach Anspruch 12 oder 13, wobei die Glasübergangstemperatur $T_G$ (gemessen bei 10 Hz) 50°C bis 150°C beträgt.

**15.** Verwendung der härtbaren Zusammensetzung nach einem der Ansprüche 1 bis 8 zur Herstellung von folgenden Produkten: Möbel und Möbeloberflächen, Kleber, Furniere und Papierlaminate, Knöpfe, Griffe, Tasten, Schalter und Gehäuse, Platten, Fußböden, Rohre, Profile, Tanks und Behälter aller Art, insbesondere für Trinkwasser, Lebensmittel und Öle, Auskleidungen aller Art, Dachbeschichtungen, Lichtplatten, Dichtmassen, Kitte, Dübelmassen, Polymerbeton, Agglomarmor, Küchenspülen, Duschtrassen, Badewannen, Waschbecken, Klobrillen, Gartenmöbel, Gartenzäune, Fassadenplatten, Kellerfensterschächte, Fahrzeugteile, Leuchtenträger, Windkraftanlagen, Imprägnierungen, Bindemittel, Vergussmassen, Spachtelmassen und/oder Reaktionsmörtel, Beschichtungen, Lacke, Gelcoats, Topcoats, Schiffe, Boote.

## Claims

**1.** Curable composition, containing

(a) a compound with a radically reactive double bond selected from an unsaturated polyester, a vinyl ester and vinyl ester urethane, and mixtures thereof and
(b) a methacrylate or acrylate selected from tert.-butylaminoethyl methacrylate, dimethylaminoethyl methacrylate, diethylaminoethyl methacrylate, tert.-butylaminoethyl acrylate, dimethylaminoethyl acrylate, diethylaminoethyl acrylate and mixtures thereof.

2. The curable composition as claimed in claim 1, wherein the unsaturated polyester is obtainable by reacting a dicarboxylic acid or a derivative of the dicarboxylic acid and a diol, the dicarboxylic acid being a compound of formula (I)

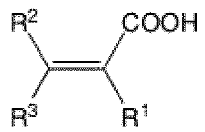

Formula (I)

where

$R^1$ is selected independently from H, $CH_3$ and $CH_2COOH$, and
$R^2$ and $R^3$ are selected independently from H, $CH_3$ and COOH.

3. The curable composition as claimed in claim 2, wherein the dicarboxylic acid is fumaric acid, mesaconic acid, maleic acid, citraconic acid or itaconic acid or anhydrides thereof.

4. The curable composition as claimed in either of claims 2 or 3, wherein the dicarboxylic acid is itaconic acid or its anhydride.

5. The curable composition as claimed in any of claims 2 to 4, wherein the diol selected from the group of 1,2-ethylene glycol, 1,2-propanediol, 1,3-propanediol, diethylene glycol, dipropylene glycol, triethylene glycol, tripropylene glycol, neopentyl glycol, butane-1,3-diol, butane-1,2-diol, butane-2,3-diol, butane-1,4-diol, 2-butyl-2-ethyl propanediol-1,3, 2-methyl propane-1,3diol, 2,2,4-trimethyl pentanediol-1,3, 2-ethyl-2-methyl propane-1,3-diol, 2,2-diethyl propanediol-1,3, 2-propyl-2-methyl propanediol-1,3, pentane-1,5-diol, hexane-1,6-diol, 2,4-dimethyl-2-ethyl hexane-1,3-diol, hydroxypivalic acid neopentyl glycol ester, isosorbide, tricyclodecane dimethanol, perhydrogenated bisphenol A, 2,2,4,4-tetramethyl cyclobutanediol-1,3, 1,4-cyclohexane dimethanol, ethoxylated and propoxylated bisphenol A or mixtures thereof.

6. The curable composition as claimed in claim 1, wherein the vinyl ester is obtainable by reacting methacrylic acid and/or acrylic acid with bisphenol A-based, bisphenol F-based and novolak-based glycidyl ethers.

7. The curable composition as claimed in claim 1, wherein the vinyl ester urethane is obtainable by reacting hydroxyalkyl acrylate and/or hydroxyalkyl methacrylate with diisocyanates and/or triisocyanates and/or polyisocyanates and optionally diol and/or triol and/or tetrol.

8. The curable composition as claimed in any of claims 1 to 7 containing
20 to 100 % by weight of the mixture of components (a) and (b)
0 to 80 % by weight reactive diluent (c)
0 to 4 % by weight initiator
0 to 60 % by weight filler
0 to 60 % by weight fibres
0 to 10 % by weight additives (d),
based on the total weight of the curable composition.

9. Use of the composition as claimed in any of claims 1 to 8 in any of the following processing methods: coating, painting, casting, dip coating, laminating, gap impregnation, centrifugation, bonding, resin injection, pressing, injection moulding, pultrusion, filling and levelling, and winding.

10. Method of preparing cured products, wherein a curable composition as claimed in any of claims 1 to 8 is cured.

11. The method as claimed in claim 10, wherein the curable composition as claimed in any of claims 1 to 8 contains a photoinitiator and is cured by irradiation.

12. A product with an antimicrobial effect obtainable by curing a curable composition as claimed in any of claims 1 to 8.

13. The product as claimed in claim 12, wherein the product has a water absorption after seven days of 0.5 to 35 %.

14. The product as claimed in either of claims 12 or 13, wherein the glass transition temperature $T_G$ (measured at 10 Hz) is 50° C to 150° C.

15. Use of the curable composition as claimed in any of claims 1 to 8 to make the following products: furniture and furniture surfaces, adhesives, veneers and paper laminates, buttons, handles, push buttons, switches and housings, plates, flooring, pipes, profiles, tanks and containers of all kinds, especially for drinking water, foodstuffs and oils, linings of all kinds, roof coatings, light panels, sealing compounds, putties, dowel compounds, polymer concrete, agglomerated marble, kitchen sinks, shower trays, bath tubs, wash basins, lavatory seats, garden furniture, garden fences, façade panels, cellar window shafts, vehicle parts, luminaires, wind power plants, impregnations, binders, grouting compounds, filling compounds and/ or reaction mortar, coatings, varnishes, gelcoats, topcoats, ships, boats.

**Revendications**

1. Composition durcissable comprenant :

(a) un composé avec une double liaison radicalement réactive choisi parmi un polyester insaturé, d'un ester de vinyle et d'un uréthane d'ester vinylique, et de mélanges de ceux-ci et
(b) un méthacrylate ou un acrylate choisi parmi le méthacrylate de tert-butylaminoéthyle, le méthacrylate de diméthylaminoéthyle, le méthacrylate de diéthylaminoéthyle, l'acrylate de tert-butylaminoéthyle, l'acrylate de diméthylaminoéthyle, l'acrylate de diéthylaminoéthyle et de mélanges de ceux-ci.

2. Composition durcissable selon la revendication 1, dans laquelle le polyester insaturé peut être obtenu par réaction d'un acide dicarboxylique ou d'un dérivé de l'acide dicarboxylique et d'un diol, l'acide dicarboxylique étant un composé selon la formule (I)

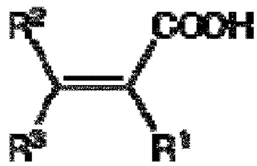

formule (I)

dans laquelle

$R^1$ est indépendamment choisi parmi H, $CH_3$ et $CH_2COOH$, et
$R^2$ et $R^3$ sont indépendamment choisi parmi H, $CH_3$ et COOH.

3. Composition durcissable selon la revendication 2, l'acide dicarboxylique étant l'acide fumarique, l'acide mésaconique, l'acide maléique, l'acide citraconique ou l'acide itaconique, ou des anhydrides de ceux-cis.

4. Composition durcissable selon la revendication 2 ou 3, l'acide dicarboxylique étant l'acide itaconique ou l'anhydride de celui-ci.

5. Composition durcissable selon l'une quelconque des revendications 2 à 4, le diol étant choisi parmi le groupe constitué par le 1,2-éthylène glycol, le 1,2-propanediol, le 1,3-propanediol, le diéthylène glycol, le dipropylène glycol, le triéthylène glycol, le tripropylène glycol, le néopentyl-glycol, le butane-1,3-diol, le butane-1,2-diol, le butane-2,3-diol, le butane-1,4-diol, le 2-butyl-2-éthylpropanediol-1,3, le 2-méthyl-propane-1,3-diol, le 2,2,4-triméthylpentanediol-1,3, le 2-éthyl-2-méthylpropane-1,3-diol, le 2,2-diéthylpropanediol-1,3, le 2-propyl-2-méthyl-1,3-propanediol, le pentane-1,5-diol, l'hexane-1,6-diol, le 2,4-diméthyl-2-éthylhexane-1,3-diol, l'ester néopentylglycolique de l'acide hydroxypivalique, l'isosorbide, le tricyclodécanediméthanol, le bisphénol A perhydrogéné, le 2,2,4,4-tetraméthylcyclobutanediol-1,3, le 1,4-cyclohexanediméthanol, le bisphénol A éthoxylé et propoxylé ou des mélanges de ceux-ci.

**6.** Composition durcissable selon la revendication 1, dans laquelle l'ester vinylique peut être obtenu par la réaction de l'acide méthacrylique et / ou de l'acide acrylique avec le bisphénol A, le bisphénol F et les éthers glycidyliques à base de novolaques.

**7.** Composition durcissable selon la revendication 1, dans laquelle l'uréthane-ester vinylique peut être obtenu par la réaction de l'acrylate d'hydroxyalkyle et / ou du méthacrylate d'hydroxyalkyle avec des diisocyanates et / ou des triisocyanates et / ou des polyisocyanates et éventuellement du diol et / ou du triol et / ou du tétrol.

**8.** Composition durcissable selon l'une quelconque des revendications 1 à 7, contenant 20 à 100% en poids du mélange des composants (a) et (b)

0 à 80% en poids de diluant réactif (c)
0 à 4% en poids d'initiateur
0 à 60% en poids de charge
0 à 60% en poids de fibres
0 à 10% en poids d'additifs (D),

sur la base du poids total de la composition durcissable.

**9.** Utilisation de la composition selon l'une quelconque des revendications 1 à 8 dans l'une des méthodes de traitement suivantes: le revêtement, la peinture, la coulée, l'immersion, le laminage, l'imprégnation à fente, le jetage, l'adhésion, l'injection de résine, le moulage, le moulage par injection, l'étirement de profiles, l'application à la spatule et l'enroulage.

**10.** Procédé pour la production de produits durcis, dans lequel une composition durcissable selon l'une quelconque des revendications 1 à 8 est durcie.

**11.** Procédé selon la revendication 10, dans lequel la composition durcissable selon l'une quelconque des revendications 1 à 8 comprend un photo-initiateur et est durcie par irradiation.

**12.** Produit avec une activité antimicrobienne pouvant être obtenu par le durcissement d'une composition durcissable selon l'une quelconque des revendications 1 à 8.

**13.** Produit selon la revendication 12, dans lequel le produit a une absorption d'eau de 0,5 à 35% au bout de sept jours.

**14.** Produit selon la revendication 12 ou 13, dans lequel la température de transition vitreuse $T_G$ (mesurée à 10 Hz) est de 50°C à 150°C.

**15.** Utilisation de la composition durcissable selon l'une quelconque des revendications 1 à 8 pour la production des produits suivants: de meubles et de surfaces de meubles, d'adhésifs, de placages et de papiers laminés, de boutons, de poignées, de touches, d'interrupteurs et de logements, de planchers, de tuyaux, de profilés, de citernes et conteneurs de toutes sortes, en particulier pour de l'eau potable, de la nourriture et des huiles, de revêtements de toutes sortes, de revêtements de toiture, de panneaux lumineux, de mastics, de ciments, de masse à cheviller, de béton polymère, d'agglomarbre, d'éviers de cuisine, de receveurs de douche, de baignoires, de lavabos, de sièges de toilette, de meubles de jardin, de clôtures de jardin, de panneaux de façade, de puits de fenêtre du sous-sol, de pièces de véhicules, de supports de luminaires, de centrales électriques éoliennes, d'imprégnations, de liants, de masses de coulée, de mastics et / ou de mortiers de réaction, de revêtements, de vernis, de revêtements de gel, de pardessus, de navires, de bateaux.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 518122 A
- WO 0185813 A
- JP 2002256030 A


### In der Beschreibung aufgeführte Nicht-Patentliteratur


- **H. MENZEL.** Schutzschicht gegen Bakterien. *Nachrichten aus der Chemie,* November 2011, vol. 59, 1039-43